(19)

Europäisches Patentamt

European Patent Office

Office européen des brevets

(11) **EP 4 236 135 A1**

(12) **EUROPEAN PATENT APPLICATION**
published in accordance with Art. 153(4) EPC

(43) Date of publication:
**30.08.2023 Bulletin 2023/35**

(21) Application number: **21882395.3**

(22) Date of filing: **13.07.2021**

(51) International Patent Classification (IPC):
*H04L 1/08* (2006.01)     *H04L 1/00* (2006.01)
*H04L 27/26* (2006.01)     *H04W 28/04* (2009.01)
*H04W 72/12* (2023.01)     *H04W 84/06* (2009.01)

(52) Cooperative Patent Classification (CPC):
**H04L 1/00; H04L 1/08; H04L 27/26; H04W 28/04;**
**H04W 72/12; H04W 84/06**

(86) International application number:
**PCT/JP2021/026327**

(87) International publication number:
**WO 2022/085254 (28.04.2022 Gazette 2022/17)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **21.10.2020   JP 2020176833**
**15.01.2021   JP 2021005151**

(71) Applicant: **Panasonic Intellectual Property**
**Corporation**
**of America**
**Torrance, CA 90504 (US)**

(72) Inventors:
• **NISHIO, Akihiko**
**Kadoma-shi Osaka 571-0057 (JP)**
• **SUZUKI, Hidetoshi**
**Kadoma-shi Osaka 571-0057 (JP)**
• **YAMAMOTO, Tetsuya**
**Kadoma-shi Osaka 571-0057 (JP)**

(74) Representative: **Grünecker Patent- und**
**Rechtsanwälte**
**PartG mbB**
**Leopoldstraße 4**
**80802 München (DE)**

(54) **COMMUNICATION DEVICE AND COMMUNICATION METHOD**

(57)     In the present invention, a terminal is provided with: a control circuit that determines data size on the basis of information relating to the number of repetitions of a transmission signal, and/or to a scheduling coefficient of the unit data size of the repetition; and a transmission circuit that transmits a transmission signal on the basis of the data size.

FIG. 5

**EP 4 236 135 A1**

**Description**

Technical Field

The present disclosure relates to a communication apparatus and a communication method.

Background Art

In the standardization of 5G, New Radio access technology (NR) has been specified in 3GPP and the Release 15 (Rel. 15) specification for NR has been published.

Citation List

Non-Patent Literature

NPL 1
3GPP, TR38.821 V16.0.0, "Solutions for NR to support non-terrestrial networks (NTN) (Release 16)," 2019-12
NPL 2
3GPP, TR38.811 V15.3.0, "Study on New Radio (NR) to support non-terrestrial networks (Release 15)," 2020-07

Summary of Invention

However, there is scope for further study on a method for improving throughput in radio communication.

One non-limiting and exemplary embodiment of the present disclosure facilitates providing a communication apparatus and a communication method each capable of improving throughput in radio communication.

A communication apparatus according to an exemplary embodiment of the present disclosure includes: control circuitry, which, in operation, performs determination of a data size, based on information on at least one of the number of times of repetition of a transmission signal and/or a scaling factor for a unit data size in the repetition; and transmission circuitry, which, in operation, performs transmission of the transmission signal, based on the data size.

Note that these generic or specific aspects may be achieved by a system, an apparatus, a method, an integrated circuit, a computer program, or a recoding medium, and also by any combination of the system, the apparatus, the method, the integrated circuit, the computer program, and the recoding medium.

According to an exemplary embodiment of the present disclosure, it is possible to improve throughput in radio communication.

Additional benefits and advantages of the disclosed exemplary embodiments will become apparent from the specification and drawings. The benefits and/or advantages may be individually obtained by the various embodiments and features of the specification and drawings, which need not all be provided in order to obtain one or more of such benefits and/or advantages.

Brief Description of Drawings

FIG. 1 illustrates an example of Hybrid Automatic Repeat Request (HARQ) processing;
FIG. 2 is a block diagram illustrating a configuration of a part of a base station according to Embodiment 1;
FIG. 3 is a block diagram illustrating a configuration of a part of a terminal according to Embodiment 1;
FIG. 4 is a block diagram illustrating an example of a configuration of the base station according to Embodiment 1;
FIG. 5 is a block diagram illustrating an example of a configuration of the terminal according to Embodiment 1;
FIG. 6 is a sequence diagram illustrating an exemplary operation of the base station and the terminal according to Embodiment 1;
FIG. 7 illustrates exemplary Code Block Groups according to Embodiment 2;
FIG. 8 is a block diagram illustrating an example of a configuration of a base station according to Embodiment 3;
FIG. 9 is a block diagram illustrating an example of a configuration of a terminal according to Embodiment 3;
FIG. 10 illustrates an exemplary architecture of a 3GPP NR system;
FIG. 11 is a schematic diagram illustrating functional split between Next Generation-Radio Access Network (NG-RAN) and 5th Generation Core (5GC);

FIG. 12 is a sequence diagram of a Radio Resource Control (RRC) connection setup/reconfiguration procedure;
FIG. 13 schematically illustrates usage scenarios of enhanced Mobile BroadBand (eMBB), massive Machine Type Communications (mMTC), and Ultra Reliable and Low Latency Communications (URLLC); and
FIG. 14 is a block diagram illustrating an exemplary 5G system architecture for a non-roaming scenario.

Description of Embodiments

Hereinafter, embodiments of the present disclosure will be described in detail with reference to the drawings.

[Extension to Non-Terrestrial Network (NTN)]

Rel. 15 is, for example, a specification related to a radio access technique for a terrestrial network. Meanwhile, in NR, extension to Non-Terrestrial Networks (NTNs) such as communication using a satellite or a High-altitude platform station (HAPS) is considered (e.g., see Non-Patent Literature (hereinafter referred to as "NPL") 1).

In an NTN environment, a satellite's coverage area (e.g., one or more cells) for a terrestrial terminal (e.g., user equipment (UE)) or a terminal installed in an aircraft is formed, for example, by beams transmitted from the satellite.

In the NTN environment, a round-trip time of radio wave propagation is determined by an altitude of a satellite (e.g., up to approximately 36000 km) or an angle viewed from a terminal, for example. By way of example, a round-trip propagation delay time (e.g., Round Trip Time (RTT)) between a terrestrial base station (e.g., gNB) and a terminal through a satellite is up to approximately 541 ms for a geostationary satellite (e.g., GEO: Geostationary Earth Orbit satellite), or approximately 42 ms for a low orbiting satellite at an altitude of 1200 km (LEO: Low Earth Orbit satellite) (or non-geostationary satellite) (see, e.g., NPL 1).

[Hybrid automatic repeat request (HARQ)]

In Long Term Evolution (LTE) or 5GNR, HARQ is applied to retransmission control during data transmission, for example.

In HARQ, a transmission side performs channel encoding (FEC: Forward Error Correction) such as turbo encoding or Low Density Parity Check (LDPC) encoding on data, for example, and transmits the channel coded data. When received data includes an error during data decoding, a reception side saves (i.e., also referred to as buffers, stores or holds) the received data (e.g., soft determination value) in a buffer. Note that a buffer is also called as, for example, an HARQ soft buffer or simply a soft buffer. During retransmission of data, the reception side combines (soft combines) the received data (i.e., retransmission data or data relating to retransmission request) and the previously received data (i.e., saved data), and decodes the combined data.

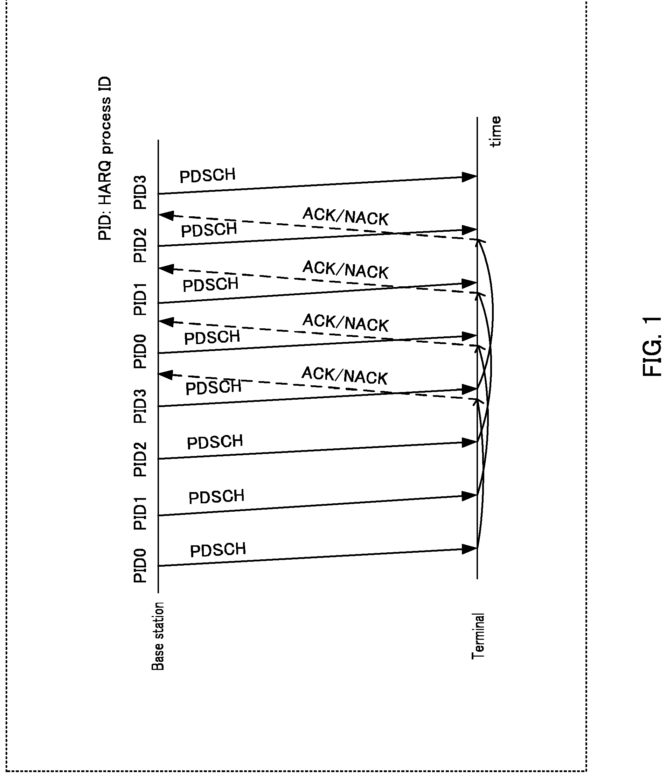

As a result, in HARQ, the reception side can perform decoding by using data with an improved received quality (e.g., SNR: Signal to Noise Ratio). Meanwhile, in HARQ, the transmission side can improve an encoding gain by transmitting a parity bit different from that in the previous transmission (e.g., different Redundancy version (RV)). Further, in HARQ, continuous data transmission is made possible by using a plurality of processes (also called as HARQ processes, for example) taking into account a propagation path delay or processing delays on the transmission side and the reception side (see, e.g., FIG. 1). In this case, the reception side saves the received data in the buffer separately for each process ID (sometimes expressed as "PID") that is identification information for identifying a process (or data).

Furthermore, for example, in LTE or NR, during data allocation, a base station indicates, to a terminal, information on HARQ, such as a process ID, a New Data Indicator (NDI), and an RV. The terminal performs reception processing (e.g., software combination processing) on the data, based on the information on HARQ indicated from the base station.

In Rel. 15 or Release 16 (Rel.16) of NR, data is scheduled in units of slots and an HARQ process is also performed in units of slots, for example. In Rel. 15/16, the number of HARQ processes is defined to up to 16, for example.

The exemplary operation of HARQ has been described, thus far.

However, in the case of execution of the retransmission control based on the HARQ process defined by Rel. 15/16 (e.g., up to 16 HARQ processes) in satellite communication, which is an environment with a large round-trip propagation delay time (e.g., RTT) as compared to the terrestrial network, the number of slots that can be transmitted in the RTT may be insufficient, which may reduce (or deteriorate) user throughput. In other words, when the retransmission control based on the HARQ process defined by Rel. 15/16 is executed in the satellite communication, an insufficient number of HARQ processes may cause a period in which no data is transmitted in RRT.

In order to improve user throughput, the number of HARQ processes may be increased. However, an excessive increase in number of HARQ processes may generate a new definition matter (i.e., impact on standards (or specifications) may be generated) such as an increase in required HARQ buffer amount in a base station or a terminal or a method of indicating the number of processes, and thus, complexity of a terminal, a base station, and a system may be increased.

Hence, an exemplary embodiment of the present disclosure, a description will be given of a method of improving user throughput with, e.g., an existing or previously specified number of HARQ processes in a radio communication system.

(Embodiment 1)

[Overview of Radio Communication System]

A radio communication system according to an embodiment of the present disclosure includes, for example, at least base station 100 and terminal 200. The radio communication system may be, for example, a satellite-based communication system in the NTN environment, or another radio communication system.

For example, in the present embodiment, in Repetition transmission defined in NR Rel. 15/16, at least one of base station 100 and terminal 200 performs data transmission by extending a transport block (TB) size according to the number of times of Repetition. This data transmission increases the amount of data that can be transmitted using the HARQ processes in number specified in NR Rel. 15/16, for example, thereby improving user throughput.

Incidentally, Repetition transmission is a transmission method to transmit, for example, the same data, that is, TB, over multiple slots. For example, in NR Rel. 15/16, in the Repetition transmission, a Redundancy Version (RV) different for each slot may be transmitted.

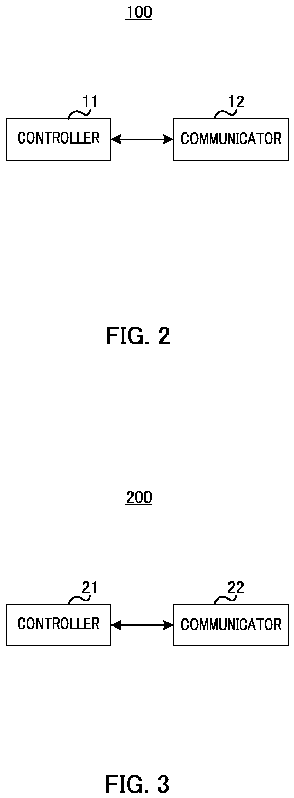

FIG. 2 is a block diagram illustrating an exemplary configuration of a part of base station 100 according to an embodiment of the present disclosure. In base station 100 illustrated in FIG. 2, in downlink, controller 11 (e.g., corresponding to control circuitry) determines a data size (e.g., TB size), based on information on at least one of the number of times of repetition of a transmission signal (e.g., the number of times of Repetition) and a scaling coefficient (scaling factor) for a unit data size in the repetition, and communicator 12 (e.g., corresponding to transmission circuitry) transmits the transmission signal based on the data size. Further, in base station 100 illustrated in FIG. 2, in uplink, controller 11 determines a data size (e.g., TB size), based information on at least one of the number of times of repetition of a received signal (e.g., the number of times of Repetition) and a scaling factor for a unit data size in the repetition, and communicator 12 (e.g., corresponding to reception circuitry) receives the received signal based on the data size.

FIG. 3 is a block diagram illustrating an exemplary configuration of a part of terminal 200 according to an embodiment of the present disclosure. In terminal 200 illustrated in FIG. 3, in downlink, controller 21 (e.g., corresponding to the control circuitry) determines a data size (e.g., TB size), based on information on at least one of the number of times of repetition of a received signal (e.g., the number of times of Repetition) and a scaling factor for a unit data size in the repetition. Communicator 22 (e.g., corresponding to reception circuitry) receives the received signal based on the data size. Further, in terminal 200 illustrated in FIG. 3, in uplink, controller 21 determines a data size (e.g., TB size), based on information on at least one of the number of times of repetition of a transmission signal (e.g., the number of times of Repetition) and a scaling factor for a unit data size in the repetition. Communicator 22 (e.g., corresponding to transmission circuitry) transmits the transmission signal based on the data size.

[Configuration of Base Station]

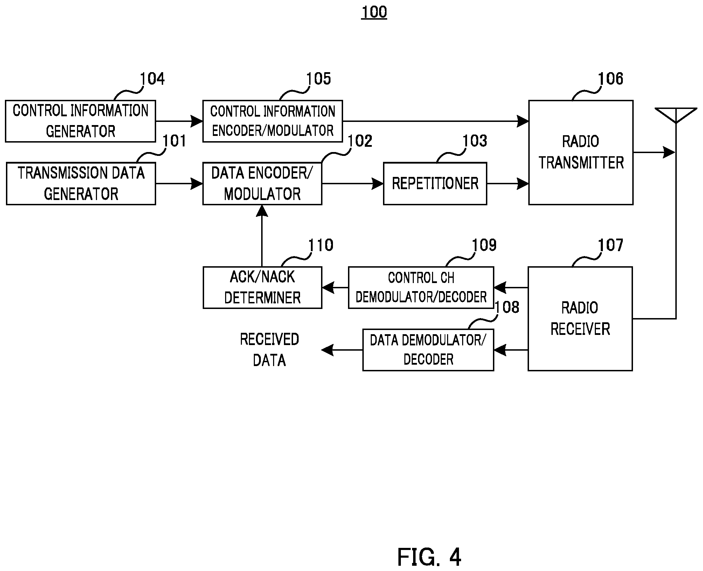

FIG. 4 is a block diagram illustrating an example of a configuration of base station 100 according to the present embodiment. Base station 100 includes, for example, transmission data generator 101, data encoder/modulator 102, Repetitioner 103, control information generator 104, control information encoder/modulator 105, radio transmitter 106, radio receiver 107, data demodulator/decoder 108, Control Channel (CH) demodulator/decoder 109, and Acknowledge (ACK)/Negative Acknowledge (NACK) determiner 110.

For example, controller 11 illustrated in FIG. 2 may include transmission data generator 101, data encoder/modulator 102, Repetitioner 103, control information generator 104, control information encoder/modulator 105, data demodulator/decoder 108, control CH demodulator/decoder 109, and ACK/NACK determiner 110 that are illustrated in FIG. 4. Communicator 12 illustrated in FIG. 2 may include radio transmitter 106 and radio receiver 107 that are illustrated in FIG. 4.

Transmission data generator 101 generates, for example, transmission data (e.g., downlink data), that is, a Transport Block (TB). For example, when multi-layer transmission in accordance with Multiple-Input Multiple-Output (MIMO) is performed, transmission data generator 101 may generate a plurality of TBs. When Repetition transmission (or repetitive transmission) is performed, for example, transmission data generator 101 may determine a TB size (or the number of information bits of transmission data), based on at least one of the number of times of Repetition and a scaling factor for a unit data size (e.g., data size per slot). Transmission data generator 101 outputs the generated transmission data to data encoder/modulator 102, for example.

An exemplary configuration method of the TB size in transmission data generator 101 will be described later.

Data encoder/modulator 102 encodes and modulates the transmission data input from transmission data generator 101 and outputs the modulated signal to Repetitioner 103, for example. An encoding method of the data may be, for example, error correction encoding such as turbo-encoding, LDPC encoding, and polar encoding, or other encoding methods. A modulation scheme of the data may be, for example, Quadrature Phase Shift Keying (QPSK) and Quadrature Amplitude Modulation (QAM), or other modulation schemes.

In addition, when the TB size of a TB is equal to or larger than a threshold value, data encoder/modulator 102 may divide the TB into a plurality of code blocks (CBs) and perform error correction encoding in units of CBs, for example. Further, data encoder/modulator 102 may extract, as transmission data, a bit string corresponding to a Redundancy Version (RV) used for transmission, for example. Further, when the Repetition transmission is performed, data encoder/modulator 102 may use an RV having a predefined pattern per slot, for example (e.g., defined by TS38.214 V16.1.0 Table 5.1.2.1-2 or Table 5.1.2.1-3).

Meanwhile, data encoder/modulator 102 holds the transmission data and performs the same processing as the above-described processing on the held data (i.e., retransmission data), based on a determination result input from ACK/NACK determiner 110, for example. By way of example, data encoder/modulator 102 may extract, as transmission data, a bit string corresponding to the RV to be used this time among the data encoded at the previous transmission, with respect to a TB or a CB group (CBG) that performs retransmission, that is, a TB or a CBG to which the determination result of NACK is input from ACK/NACK determiner 110, for example. In a case where the determination result input from ACK/NACK determiner 110 indicates that the transmission data is error-free, data encoder/modulator 102 may discard the held data, for example.

Repetitioner 103 maps the data input from data encoder/modulator 102 to time-domain and frequency-domain resources corresponding to the defined number of slots (or time sections), for example. The time-domain and frequency-domain resources may be defined by, for example, symbols and subcarriers or resource blocks. Moreover, a Repetition unit is not limited to a slot and may be specified by another unit such as a symbol or a frame. Repetitioner 103 outputs the data mapped to the resources to radio transmitter 106.

Control information generator 104 may generate control information on scheduling in at least one of downlink and uplink, for example. The information on scheduling may include, for example, resource allocation information in at least one of time-domain and frequency-domain, Demodulation Reference Signal (DMRS) port information, information on a coding rate and a modulation scheme (e.g., Modulation and Coding Scheme (MCS) information), and information on HARQ (e.g., processing ID, NDI, and RV). Control information generator 104 may also generate information on the number of times of Repetition and generate information on a scaling factor for TB size (e.g., Scaling factor), for example.

Control information encoder/modulator 105 encodes and modulates the control information input from control information generator 104 and outputs the resultant modulated signal to radio transmitter 106, for example.

Radio transmitter 106 performs transmission processing such as D/A conversion, up-conversion, and amplification on the data signal input from Repetitioner 103 and the control information input from control information encoder/modulator 105, and transmits a radio signal obtained by the transmission processing from an antenna, for example.

For example, in downlink of LTE or 5G NR, the data signal corresponds to a signal to be transmitted via a Physical Downlink Shared Channel (PDSCH) and the control information corresponds to a signal to be transmitted via Downlink Control Information (DCI) or a Physical Downlink Control Channel (PDCCH).

Radio receiver 107 performs reception processing such as down-conversion and A/D conversion on the signal from terminal 200 received via the antenna (e.g., data signal and ACK/NACK signal), for example. Radio receiver 107 outputs the data signal obtained by the reception processing to data demodulator/decoder 108, and outputs the control information obtained by the reception processing to control CH demodulator/decoder 109, for example.

For example, in uplink of LTE or 5G NR, the data signal corresponds to the signal to be transmitted via a Physical Uplink Shared Channel (PUSCH) and the control information corresponds to the signal to be transmitted via a Physical Uplink Control Channel (PUCCH).

Data demodulator/decoder 108 performs a channel estimation and demodulation/decoding processing on a data received signal such as PUSCH to be input from radio receiver 107, for example. By way of example, during decoding, data demodulator/decoder 108 may perform the decoding processing, assuming a TB size that is based on the number of times of Repetition or the scaling factor that have been specified at the time of uplink data allocation. Data demodulator/decoder 108 may output the data signal after decoding (i.e., received data), for example.

Control CH demodulator/decoder 109 performs a channel estimation and demodulation/decoding processing on a received signal of a control channel such as PUCCH, and outputs an ACK/NACK signal included in the received signal to ACK/NACK determiner 110, for example.

ACK/NACK determiner 110 determines ACK or NACK for the transmitted transmission data (e.g., TB), based on the ACK/NACK signal input from control CH demodulator/decoder 109, for example. ACK/NACK determiner 110 outputs a determination result to data encoder/modulator 102. In a case where the ACK/NACK signal is NACK, for example, ACK/NACK determiner 110 may indicate, to data encoder/modulator 102, a TB or a CBG to be retransmitted. Incidentally, ACK/NACK determiner 110 may receive, from terminal 200, ACK/NACK information for the number of CBGs, for example.

[Configuration of Terminal]

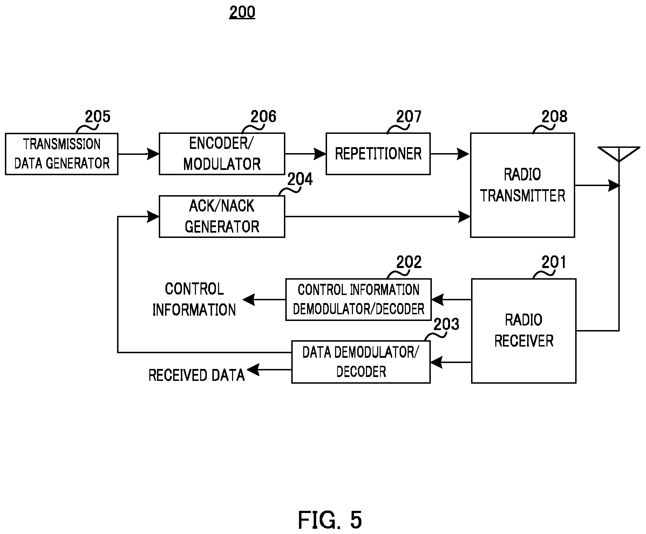

FIG. 5 is a block diagram illustrating an example of a configuration of terminal 200 according to the present embodiment. Terminal 200 include, for example, radio receiver 201, control information demodulator/decoder 202, data demodulator/decoder 203, ACK/NACK generator 204, transmission data generator 205, encoder/modulator 206, Repetitioner 207, and radio transmitter 208.

For example, controller 21 illustrated in FIG. 3 may include control information demodulator/decoder 202, data demodulator/decoder 203, ACK/NACK generator 204, transmission data generator 205, encoder/modulator 206, and Repetitioner 207 that are illustrated in FIG. 5. Communicator 22 illustrated in FIG. 3 may include radio receiver 201 and radio transmitter 208 that are illustrated in FIG. 5.

Radio receiver 201 performs reception processing such as down-conversion and A/D conversion on the signal received from base station 100 via the antenna, and, in the received signal after the reception processing, outputs a control channel (e.g., PDCCH) to control information demodulator/decoder 202 and outputs a data channel (e.g., PDSCH) to data demodulator/decoder 203.

Control information demodulator/decoder 202 may demodulate and decode the control channel (e.g., PDCCH) input from radio receiver 201, and output the obtained control information to another component (e.g., data demodulator/decoder 203, transmission data generator 205, encoder/modulator 206, or Repetitioner 207) (not illustrated), for example. The control information may include, for example, scheduling information in at least one of downlink and uplink.

Data demodulator/decoder 203 performs demodulation and error-correction decoding on the data channel (e.g., PUSCH) input from radio receiver 201, for example. During processing on the data signal, for example, data demodulator/decoder 203 may, based on the scheduling information in downlink included in the control information, identify the modulation scheme and the coding rate, calculate a TB size, and then perform processing based on the calculated TB size.

In one example, data demodulator/decoder 203 may determine (e.g., calculate) a TB size based on the number of times of Repetition or a scaling factor. Data demodulator/decoder 203 may determine, based on NDI, whether the received data is initial transmission data or retransmission data, for example. In a case where the received data is the initial transmission data, data demodulator/decoder 203 may perform error-correction decoding on the received data and then perform Cyclic Redundancy Check (CRC) determination. On the other hand, in a case where the received data is the retransmission data, data demodulator/decoder 203 may perform error-correction decoding after combining this received data with a previous received data and then perform the CRC determination, for example. Further, when the Repetition transmission is configured, data demodulator/decoder 203 may save the demodulated data and perform the decoding processing after receiving the data of the plurality of slots used for the Repetition transmission, for example.

ACK/NACK generator 204 generates an ACK/NACK signal based on the CRC determination result input from data demodulator/decoder 203. ACK/NACK generator 204 generates ACK in the case of CRC OK (error-free) and generates NACK in the case of CRC NG (Not Good, i.e., with error), for example. ACK/NACK generator 204 outputs the generated ACK/NACK signal to radio transmitter 208.

Note that, when a plurality of TBs or CBs is transmitted, ACK/NACK generator 204 may generate an ACK/NACK signal for each TB or each CB and generate an ACK/NACK code block including the plurality of ACK/NACK signals.

Transmission data generator 205 generates, for example, transmission data (e.g., uplink data), that is, a Transport Block (TB). For example, when multi-layer transmission in accordance with MIMO is performed, transmission data generator 205 may generate a plurality of TBs. When Repetition transmission (or multiple-times transmission) is performed, for example, transmission data generator 205 may determine a TB size (or the number of bits of transmission data), based on the number of times of Repetition or a scaling factor. Transmission data generator 205 outputs the generated transmission data to encoder/modulator 206, for example.

An exemplary configuration method of the TB size in transmission data generator 205 will be described later.

Encoder/modulator 206 encodes and modulates the transmission data input from transmission data generator 205 and outputs the modulated signal to Repetitioner 207, for example. Encoder/modulator 206 may configure a coding rate and a modulation scheme, based on the received scheduling information in uplink, for example. An encoding method of the data may be, for example, error correction encoding such as turbo-encoding, LDPC encoding, and polar encoding, or other encoding methods. A modulation scheme of the data may be, for example, QPSK and QAM, or other modulation schemes.

In addition, when the TB size of a TB is equal to or larger than a threshold value, encoder/modulator 206 may divide the TB into a plurality of CBs and perform error correction encoding in units of CBs, for example. Further, encoder/modulator 206 may extract, as transmission data, a bit string corresponding to a Redundancy Version (RV) used for transmission, for example. Further, when the Repetition transmission is performed, encoder/modulator 206 may use an RV having a predefined pattern per slot, for example (e.g., defined by TS38.214 V16.1.0 Table 6.1.2.1-2).

Meanwhile, encoder/modulator 206 holds the transmission data and performs the same processing as the above-described processing on the held data (i.e., retransmission data), based on the ACK/NACK signal from base station 100, for example. By way of example, encoder/modulator 206 may extract, as transmission data, a bit string corresponding to the RV to be used this time among the data encoded at the previous transmission, with respect to a TB or a CB group (CBG) that performs retransmission. In a case where the ACK/NACK signal from base station 100 indicates that the transmission data is error-free, encoder/modulator 206 may discard the held data, for example.

Repetitioner 207 maps the data input from encoder/modulator 206 to time-domain and frequency-domain resources corresponding to the defined number of slots (or time sections), for example. The time-domain and frequency-domain resources may be defined by, for example, symbols and subcarriers or resource blocks. Repetitioner 207 outputs the data mapped to the resources to radio transmitter 208.

Radio transmitter 208 performs transmission processing such as D/A conversion, up-conversion, and amplification on the data signal input from Repetitioner 207 and the ACK/NACK signal input from ACK/NACK generator 204, and transmits a radio signal obtained by the transmission processing from an antenna, for example.

In FIGS. 4 and 5, the retransmission control for downlink data has been mainly described, but base station 100 and terminal 200 may perform retransmission control for uplink data in the same manner as in downlink. For example, base station 100 may generate an ACK/NACK signal based on a CRC determination result for uplink data and transmit the ACK/NACK signal to terminal 200. Meanwhile, terminal 200 may perform an ACK/NACK determination based on the ACK/NACK signal for the uplink data and thereby control retransmission of the uplink data (e.g., TB or CBG).

[Exemplary operation of base station 100 and terminal 200]

Next, a description will be given of an exemplary operation of base station 100 and terminal 200 described above.

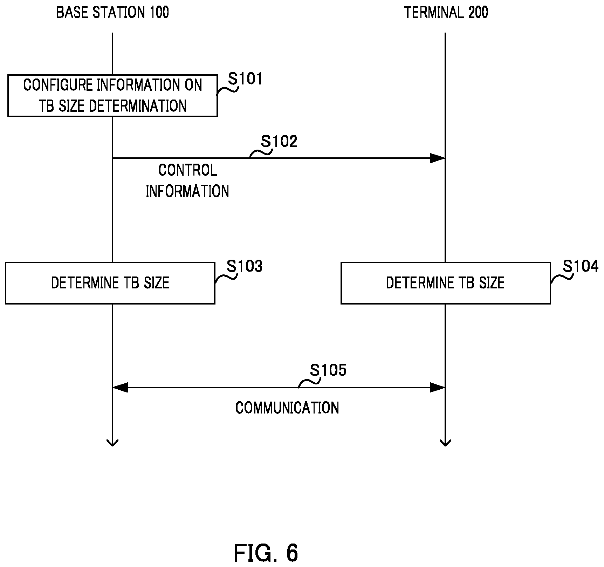

FIG. 6 is a sequence diagram illustrating an exemplary operation of base station 100 and terminal 200.

In FIG. 6, base station 100 may configure information on a TB size determination, for example (S101). The information on the TB size determination may include, for example, the number of times of Repetition or a scaling factor to be described below.

Base station 100 may transmit, to terminal 200, control information including the configured information on the TB size determination, for example (S102).

Base station 100 determines, based on the configured information on the TB size determination, a TB size of at least one of downlink data (e.g., transmission data) and uplink data (e.g., reception data), for example (S103).

Similarly, terminal 200 determines, based on the information on the TB size determination that is included in the received control information, a TB size of at least one of downlink data (e.g., reception data) and uplink data (e.g., transmission data), for example (S104).

Base station 100 and terminal 200 perform data communication in at least one of downlink and uplink, based on the determined TB size (S105).

Hereinafter, exemplary configuration methods of the TB size will be described.

<Configuration Method 1>

In Configuration Method 1, a TB size may be configured based on the number of times of Repetition, for example. In other words, the TB size may be configured based on the number of slots (e.g., time sections) used for Repetition, which is one of types of multiple-times transmission.

For example, in NR Rel. 15/16, a TB size (e.g., the number of information bits) is configured based on "$N_{info}$," which is a value (e.g., also referred to as intermediate variable) calculated according to Equation 1 (as described in TS38.214 V16.1.0 section 5.1.3 and 6.1.4, for example). The TB size may be determined by, for example, further adjustment according to a value of $N_{info}$. For example, the larger the value of $N_{info}$ is, the larger TB size may be configured. [1]

$$N_{info} = N_{RE} \cdot R \cdot Q_m \cdot \upsilon \ \text{... (Equation 1)}$$

- $N_{RE}$: number of resource elements used for data transmission
- R: coding rate
- $Q_m$: modulation order
- $\upsilon$: number of MIMO layers

In Configuration Method 1, when the number of times of Repetition is "$N_{rep}$," for example, a TB size may be configured based on $N_{info}$ calculated according to the following Equation 2.
[2]

$$N_{info} = N_{RE} \cdot R \cdot Q_m \cdot \upsilon \cdot N_{rep} \quad ... \text{ (Equation 2)}$$

From Equation 2, the larger the number of times of Repetition, $N_{rep}$, is, the larger TB size is configured, for example. Thus, for example, the larger the number of times of Repetition, $N_{rep}$, is, the larger the number of informational bits transmitted in each slot used for the Repetition transmission is, which improves user throughput.

Meanwhile, for example, the plurality of slots used for the Repetition transmission uses the same HARQ process. Therefore, the Repetition transmission can use more slots in an RTT without increasing the number of HARQ processes. For example, in an environment where the RTT is very long compared to the slot length, such as an NTN environment, user throughput can be improved by extending a TB size based on the number of times of Repetition, without increasing the number of HARQ processes.

In addition, for example, the TB size is increased by the Repetition transmission in accordance with an increase in number of slots used for data transmission, so that an actual coding rate (e.g., MCS) can be configured in substantially the same manner as how coding rate (e.g., MCS) is configured when no Repetition transmission is performed. Therefore, even when the Repetition transmission is performed, it is possible to suppress a decrease in frequency-utilization efficiency (Spectral efficiency) and to transmit at a necessary and sufficient error rate (e.g., BLER: Block Error Rate).

Incidentally, in the TB size configuration, whether to apply the number of times of Repetition, $N_{rep}$ (e.g., whether to apply either Equation 1 or Equation 2), may be separately indicated, to terminal 200 by, an RRC message (or also referred to as RRC signaling, higher layer parameter), a MAC CE (Control Element), or the DCI, for example. With this indication, for example, a larger TB size is configured for terminal 200 or a traffic type that is expected to improve a data rate, by applying Equation 2, and thereby improving throughput. On the other hand, a smaller TB size is configured for a terminal or a traffic type different from the above, by applying Equation 1, and thus, improving the reliability by Repetition (i.e., transmission at lower error rate) is possible.

Incidentally, in NTN, disablement of retransmission by HARQ (e.g., configuration of "HARQ-feedback disable") for a traffic for which low latency is required has been discussed, for example. When the retransmission by HARQ is disabled, transmission with higher reliability (e.g., lower error rate) is expected because no retransmission by HARQ is performed.

Thus, in Configuration Method 1, as in Equation 2, $N_{rep}$ may be applied, in the TB size configuration, to a case where the retransmission by HARQ is enabled (e.g., HARQ-feedback enable is configured) or an HARQ process in which the retransmission by HARQ is enabled, for example. By way of example, base station 100 and terminal 200 may determine a TB size based on the number of times of Repetition, $N_{rep}$, according to Equation 2, with respect to a case where the retransmission control by HARQ is applied (e.g., "HARQ-feedback enable" is configured) or data (or HARQ process) to which the retransmission control by HARQ is applied. For example, as in Equation 1, $N_{rep}$ is not applied, in the TB size configuration, to a case where the retransmission by HARQ is disabled (e.g., HARQ-feedback disable is configured) or an HARQ process in which the retransmission by HARQ is disabled, and thus, improving the reliability by Repetition (e.g., transmission with low error rate) is possible.

Note that the number of times of Repetition, $N_{rep}$ (or parameter for deriving the number of times of Repetition), may be indicated, to terminal 200, by at least one of the RRC message and the DCI, for example.

For example, as an RRC message for configuration of the number of times of Repetition, "pdsch-Aggregation-Factor" (message for downlink), "pusch-AggregationFactor" (message for uplink), or "repK" in "ConfigureGrantConfig" (parameter for uplink Configured grant), which are specified in TS38.331 V16.1.0, or other messages may be used, for example.

With respect to the number of times of Repetition, a plurality of candidates therefor may be indicated to (or configured for) terminal 200 by the RRC message, and any one of the plurality of candidates may be indicated to terminal 200 by the DCI per PDSCH or PUSCH assignment (e.g., scheduling information), for example. In this case, as an RRC message for configuration of the plurality of candidates, "PDSCH-TimeDomainResourceAllocationList-r16" (message for downlink), "repetitionNumber-r16" in "PUSCH-TimeDomainResourceAllocationList-r16" (message for uplink), or other messages may be used, for example.

Such indication of the number of times of Repetition makes it possible to reuse an indication structure in the existing standards, which reduces the complexities of processing in terminal 200.

Further, in this indication of the number of times of Repetition, since the number of times of Repetition is explicitly indicated to terminal 200, scheduling information may be indicated to terminal 200 by the DCI at the time of initial transmission, and the same TB based on the scheduling information (e.g., data of the same TB size) may be transmitted in consecutive slots, for example. In other words, scheduling information may not be indicated by the DCI in slots after the slot corresponding to the initial transmission of the Repetition transmission.

Further, in downlink, base station 100 (e.g., Repetitioner 103) may transmit (e.g., repeatedly transmit) the same TB in a plurality of slots, without indicating the number of times of Repetition to terminal 200. Such a transmission method (or retransmission method) may be referred to as, for example, "Blind retransmission" or "Open loop HARQ." In this case, scheduling information may be indicated to terminal 200 by the DCI in each slot. For example, base station 100 may perform retransmission without waiting for reception of an ACK/NACK signal from terminal 200. In this case, base station 100 may transmit the same TB in consecutive slots or non-consecutive slots, for example. Further, even in uplink, base station 100 may indicate (or instruct), to terminal 200 by the DCI, the retransmission of the same TB without waiting for reception of uplink data (e.g., PUSCH) from terminal 200, and may cause terminal 200 to transmit the same TB by using multiple slots, for example. In Configuration Method 1, even in such a transmission method, base station 100 and terminal 200 may configure a TB size based on the number of times of Repetition, $N_{rep}$, for example,.

<Configuration Method 2>

In Configuration Method 2, a TB size may be configured based on a scaling factor (or referred to as scaling factor), for example. In other words, the TB size may be configured based on a scaling factor for a TB size in multiple slots (e.g., time sections) used for multiple-times transmission.

In Configuration Method 2, when the scaling factor is "$N_{scaling}$," for example, a TB size may be configured based on $N_{info}$ calculated according to the following Equation 3.

[3]

$$N_{info} = N_{RE} \cdot R \cdot Q_m \cdot \upsilon \cdot N_{scaling} \ \dots \ (Equation \ 3)$$

From Equation 3, the larger the scaling factor, $N_{scaling}$, is, the larger TB size is configured, for example. Thus, for example, the larger the scaling factor, $N_{scaling}$, is, the larger the number of informational bits transmitted in each slot used for the multiple-times transmission is, which improves user throughput.

Examples of configuration methods of a scaling factor include, for example, a method of semi-statically configuring for (or indication to) terminal 200 by an RRC message and a method of dynamically configuring for (or indication to) terminal 200 by the DCI.

Meanwhile, for a scaling factor, a value larger than or equal to one may be configured. Further, a scaling factor may be an integer value or a decimal value, for example. In a case where a scaling factor is configured as a decimal value, ceiling (round-up) computation or floor (round-down) computation may be performed in Equation 3.

In the method of semi-statically configuring a scaling factor, for example, a scaling factor may be semi-statically indicated to terminal 200 by an RRC message. For example, as an RRC message for configuration of the scaling factor, "PDSCH-TimeDomainResourceAllocationList" or "PUSCH-TimeDomainResourceAllocationList" may be used, "PDSCH-Config" or "PUSCH-Config," may be used, and other messages may be used.

Further, for example, when the Repetition transmission is performed, a scaling factor may be applied in the TB size configuration (e.g., application of Equation 3). In other words, when no Repetition transmission is performed, a scaling factor may not be applied in the TB size configuration (e.g., application of Equation 1). That is, in the TB size determination, for example, base station 100 and terminal 200 perform the determination based on the scaling factor in a case where the Repetition transmission is applied, and may perform the determination not based on the scaling factor in a case where no Repetition transmission is applied. Alternatively, information indicating whether to apply a scaling factor in TB size configuration may be indicated to terminal 200. The information indicating whether to apply a scaling factor may be indicated to terminal 200 by the DCI per data scheduling, for example.

Further, a scaling factor may be individually configured for an HARQ process, for example. In a case where the number of times of Repetition is configured individually for an HARQ process, a scaling factor may be applied to an HARQ process in which the Repetition transmission is performed, whereas a scaling factor may not be applied to an HARQ process in which no Repetition transmission is performed, for example.

In the manner described above, a scaling factor is applied to a case or an HARQ process in which retransmission by HARQ is enabled, thereby improving throughput. Alternatively, for example, a scaling factor is not applied to a case or an HARQ process in which retransmission by HARQ is disabled (e.g., HARQ-feedback disable is configured), thereby improving transmission reliability by Repetition.

The method of semi-statically configuring a scaling factor has been described, thus far.

By contrast, in the method of dynamically configuring a scaling factor, for example, a scaling factor may be indicated to terminal 200 by DCI indicating scheduling information on data.

Further, for example, a plurality of candidates for scaling factors may be configured for terminal 200 by the RRC message, and any one scaling factor in the plurality of candidates may be indicated to terminal 200 by the DCI per scheduling of data.

By way of example, a scaling factor may be included in information relating to time-domain resource allocation (e.g., Time Domain Resource Allocation (TDRA)) (e.g., allocation pattern of time-domain resource). The TDRA information may be represented in a table format (e.g., TDRA table), for example. In other words, a scaling factor may be defined in the TDRA table. In this case, for example, a plurality of candidates for TDRA information may be configured for terminal 200 by the RRC message (e.g., PDSCH-TimeDomainResourceAllocationList-r16 or PUSCH-TimeDomain-ResourceAllocationList-r16), and any one of allocation patterns (including scaling factor) in the plurality of candidates may be indicated to terminal 200 by the DCI.

Alternatively, a scaling factor may be included in, for example, information including a scaling factor (e.g., value of less than or equal to one) for Paging or random access processing (e.g., Random Access Channel (RACH) response). The information including the scaling for the Paging or the random access processing may be represented in a table, for example. In other words, a scaling factor for the multiple-times transmission may be defined in the table including the scaling factor for the Paging or the random access processing.

In this case, for example, a table may be defined that includes the scaling factor (e.g., value larger than or equal to one) for the multiple-times transmission, in addition to the scaling factor (e.g., value of less than or equal to one) for the Paging (e.g., P-RNTI) or the random access processing (e.g., RA-RNTI) included in the table defined by Table 5.1.3.2-2 in TS38.214 V16.1.0. Further, for example, a plurality of candidates for scaling factors may be configured for terminal 200 by the RRC message, and any one scaling factor in the plurality of candidates may be indicated to terminal 200 by the DCI (e.g., TB scaling field).

The method of dynamically configuring a scaling factor has been described, thus far.

Such indication of the scaling factor makes it possible to indicate a scaling factor in an indication structure in the existing standards, which reduces the complexities of processing in terminal 200.

According to Configuration Method 2, more slots in an RTT can be used without increasing the number of HARQ processes by, for example, extending a TB size based on the scaling factor in a plurality of slots used for multiple-times transmission such as the Repetition transmission or the Blind retransmission. For example, in an environment where the RTT is very long compared to the slot length, such as an NTN environment, user throughput can be improved by extending a TB size based on the scaling factor, without increasing the number of HARQ processes.

In addition, for example, since the TB size is increased according to an increase in number of slots used for data transmission by the multiple-times transmission, an actual coding rate (e.g., MCS) can be controlled based on, for example, a scaling factor. Therefore, even when the multiple-times transmission is performed, controlling the scaling factor (or coding rate or MCS) makes it possible to suppress a decrease in frequency-utilization efficiency (Spectral efficiency) and to transmit at a necessary and sufficient error rate (e.g., BLER).

Further, according to Configuration Method 2, a scaling factor can be configured for terminal 200 independently of the number of times of Repetition, for example. Thus, for example, in the case of application of the Blind retransmission in which the number of times of Repetition is not explicitly indicated to terminal 200, base station 100 and terminal 200 can configure, by using a scaling factor, a TB size based on the number of times of transmission or the number of slots of the same TB.

Incidentally, for example, the larger the value configured as a scaling factor is, the larger transmission data amount is, which reduces the transmission reliability. In other words, the smaller the value configured as a scaling factor is, the less transmission data amount is, which improves transmission reliability. Thus, a trade-off between throughput and transmission reliability can be adjusted by adjusting the scaling factor, so that various types of traffic with different latency or a reliability requirement can be accommodated efficiently.

Exemplary configuration methods of TB size have been each described, thus far.

Note that Configuration Method 1 and Configuration Method 2 may be combined. In one example, Configuration Method 1 (TB size configuration based on the number of times of Repetition) may be applied to either downlink or uplink, and Configuration Method 2 (TB size configuration based on scaling factor) may be applied to the other. Alternatively, for example, a TB size may be configured based on both of the number of times of Repetition, $N_{rep}$, and the scaling factor, $N_{scaling}$. In one example, for Equation 1, the number of times of Repetition, $N_{rep}$, and the scaling factor, $N_{scaling}$, may be multiplied.

Thus, according to the present embodiment, base station 100 and terminal 200 determine the TB size based on the number of times of Repetition, $N_{rep}$, or the scaling factor, $N_{scaling}$.

Thus, for example, even in the case of using the HARQ process defined by Rel. 15/16 (e.g., up to 16 HARQ processes) in satellite communication, which is an environment with a large round-trip propagation delay time (e.g., Round Trip Time (RTT)) as compared to the terrestrial network, it is possible to increase the number of information bits that can be transmitted in the RTT, by extending the TB size in each HARQ process based on the number of slots used for the multiple-times transmission, thereby improving user throughput.

Further, improvement of user throughput by extending the TB size can suppress an increase in number of HARQ processes in the present embodiment. Therefore, for example, an increase in amount of required HARQ buffer in base station 100 or terminal 200 can be suppressed, and generation of a new definition matter such as an indication method of the number of processes can be also suppressed, thereby suppressing an increase in complexities of terminal 200, base station 100, and the radio communication system.

Incidentally, while increasing the number of HARQ processes to some extent (e.g., up to 32), a TB size may be determined based on the number of times of Repetition, $N_{rep}$, or the scaling factor, $N_{scaling}$. In this case, the number of times of Repetition, $N_{rep}$, or the scaling factor, $N_{scaling}$, for transmitting enough information bits in the RTT is suppressed to some extent, and thus, a TB size does not become extremely large.

An upper limit value of the scaling factor for the TB size configuration may be configured to, for example, the number of RTTs(slots)/HARQ processes, or may be configured to a configurable number of times of Repetition.

Moreover, for example, in a case where $N_{rep}$ or $N_{scaling}$ for the TB size configuration is not applied while the HARQ retransmission is disabled (HARQ-feedback disable), $N_{rep} = 1$ or $N_{scaling} = 1$ may be configured.

Further, for example, applicability of $N_{rep}$ or $N_{scaling}$ to the TB size configuration may be indicated to terminal 200 by a System Information Block (SIB), per cell. Alternatively, the applicability of $N_{rep}$ or $N_{scaling}$ to the TB size configuration may be configured for or indicated to each terminal 200, depending on the capability of terminal 200 (e.g., UE capability), for example. Alternatively, terminal 200 may indicate, to base station 100, the applicability of $N_{rep}$ or $N_{scaling}$ or an upper limit value of applicable $N_{rep}$ or $N_{scaling}$, and then base station 100 may configure $N_{rep}$ or $N_{scaling}$ based on the indication made by terminal 200.

Further, a TB size calculated by the application of $N_{rep}$ or $N_{scaling}$ may be configured within a range not exceeding the upper limit of the TB size supported by terminal 200, for example.

(Embodiment 2)

Configurations of a base station and a terminal according to an embodiment of the present disclosure may be the same as those in Embodiment 1.

In the present embodiment, base station 100 and terminal 200 determine (e.g., extend) the number of code block groups (CBGs), based on information on the number of times of Repetition or the scaling factor, for example.

By way of example, in NR Rel. 15/16, a plurality of CBGs can be used. In one example, ACK/NACK is generated per CBG, and retransmission by HARQ is performed for a CBG with an error and the retransmission by HARQ is not performed for a CBG without an error. This retransmission in units of CBGs can improve the retransmission efficiency.

For example, information on the number of CBGs (e.g., the largest number of CBGs) may be indicated to terminal 200 by an RRC message. For example, the number of bits of one code block has an upper limit, and thus, a plurality of code blocks may be generated for data with a TB size exceeding the upper limit. The CBG may be configured by grouping the plurality of code blocks, for example.

In the present embodiment, base station 100 and terminal 200 increase the number of CBGs when the TB size is configured (e.g., increased) based on the number of times of Repetition or the scaling factor described in Embodiment 1, for example.

By way of example, in downlink, when configuring a TB size based on the number of times of Repetition or the scaling factor, base station 100 (e.g., transmission data generator 101) may determine the number of CBGs based on the TB size configuration (e.g., configuration of the number of times of Repetition or scaling factor). In addition, in downlink, terminal 200 (e.g., data demodulator/decoder 203) may demodulate and decode the received data for each of the CBGs in number based on the TB configuration.

Similarly, for example, in uplink, when configuring a TB size based on the number of times of Repetition or the scaling factor, terminal 200 (e.g., transmission data generator 205) may determine the number of CBGs based on the TB size configuration (e.g., configuration of the number of times of Repetition or scaling factor). In addition, in uplink, base station 100 (e.g., data demodulator/decoder 108) may demodulate and decode the received data for each of the CBGs in number based on the TB configuration.

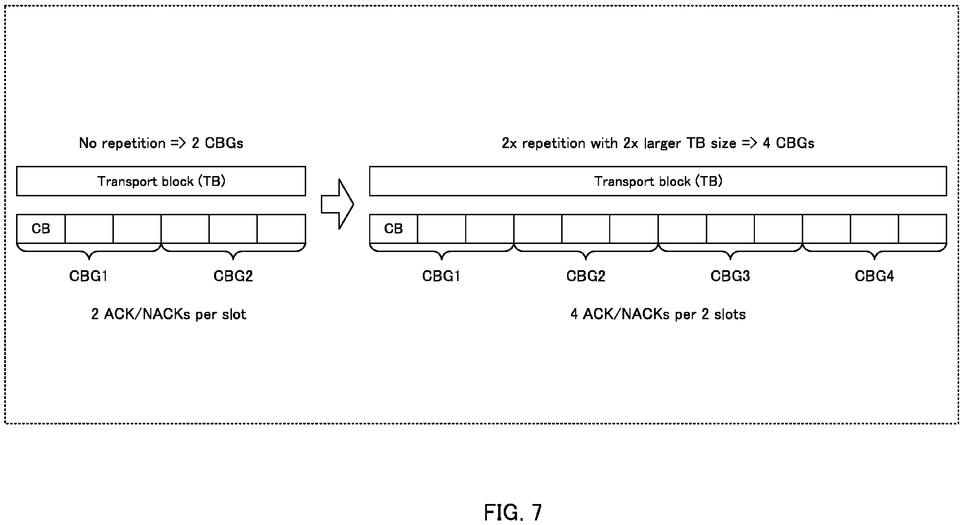

FIG. 7 illustrates a configuration example of a CBG. The example illustrated in FIG. 7 indicates a configuration example of a CBG in a case where no Repetition transmission is applied and a configuration example of a CBG in a case where the Repetition transmission is applied in which the number of times of Repetition =2.

As illustrated in FIG. 7, in a case where no Repetition transmission is applied, two CBGs (CBG1 and CBG2) each including three CBs are configured. In this case, with respect to a TB transmitted in units of slots, two ACK/NACK signals may be transmitted for the two CBGs (one ACK/NACK signal per CBG), for example.

Further, as illustrated in FIG. 7, in a case where the Repetition transmission is applied in which the number of times of Repetition = 2 (e.g., $N_{rep} = 2$ in Equation 2), the TB size is doubled as compared to the case where no Repetition transmission is applied, and thus, for example, the number of CBGs may be configured to be twice as compared to the case where no Repetition transmission is applied. In FIG. 7, four CBGs (CBG1, CBG2, CBG3, and CBG4) each including three CBs are configured, for example. In this case, with respect to a TB transmitted over two slots, four ACK/NACK signals may be transmitted for the four CBGs (one ACK/NACK signal per CBG), for example.

Thus, the number of CBGs may be configured to be $N_{rep}$ (the number of times of Repetition) times of the number CBGs, as compared to that of the case where no Repetition transmission is applied. Further, in a case where the scaling factor, $N_{scaling}$, is applied in the TB size determination, as with the number of times of Repetition, $N_{rep}$, the number of CBGs may be configured to be $N_{scaling}$ (scaling factor) times of the number thereof, as compared to that of the case where no Repetition transmission is applied.

Incidentally, an upper limit value may be specified for a configuration value of the number of CBGs. Specifying the upper limit value can suppress, for example, occurrence of a situation where the number of CBGs is configured to be extremely large depending on the number of times of Repetition, $N_{rep}$, or the scaling factor, $N_{scaling}$, takes.

Here, for example, the scheduling information indicated to terminal 200 by the DCI includes CBG transmission information (CBG TI). A CBG TI field is configured with a size (e.g., the number of bits) dependent on a value of a CBG, for example. For this reason, the size of CBG TI field may be configured to a size that is based on the maximum value of the number of CBGs according to $N_{rep}$ times, $N_{scaling}$ times, or the largest number of CBGs, for example. In the manner described above, for example, the size of CBG TI field can be configured to be a fixed value, which can suppress change in a DCI size dependent on applicability of $N_{rep}$ times or $N_{scaling}$ in the TB size configuration and an increase in number of times of blind decoding in terminal 200.

Meanwhile, for example, as illustrated in FIG. 7, since an increase in the number of CBGs cause a change (e.g., increase) in the number of ACK/NACK bits, base station 100 and terminal 200 may determine, based on the number of CBGs, a PUCCH resource amount for transmitting ACK/NACK. Hereinafter, exemplary using methods of the PUCCH resource amount for transmitting ACK/NACK will be described.

<Using Method 1 of PUCCH resource>

In Using Method 1, base station 100 and terminal 200 may use a PUCCH resource configured for terminal 200 by the RRC message or the DCI, over slots of the same number as the number of times of Repetition of data, for example.

Base station 100 and terminal 200 may perform at least one of transmission and reception of the increased ACK/NACK bits with the PUCCH resource configured for terminal 200 over the slots of the same number as the number of times of Repetition of data, for example. In Using Method 1, the number of bits of an ACK/NACK signal transmitted over multiple slots may be common between the slots, for example.

Using Method 1 may be applied to, for example, a case where the number of bits that can be transmitted with the PUCCH resource configured for terminal 200 is small (e.g., not more than threshold value). As an example, Using Method 1 is effective when a PUCCH resource capable of transmitting one to two bits (e.g., PUCCH format 0) is used.

<Using Method 2 of PUCCH resource>

In Using Method 2, base station 100 and terminal 200 may increase the number of bits that can be transmitted (the number of transmission bits) with the PUCCH resource configured for terminal 200 by the RRC message or the DCI, for example.

Base station 100 and terminal 200 may transmit an increased ACK/NACK bit with the PUCCH resource having the increased number of bits, for example.

Using Method 2 may be applied to, for example, a case where the number of bits that can be transmitted with the PUCCH resource configured for terminal 200 is large (e,g., larger than threshold value). As an example, Using Method 2 is effective when a PUCCH resource capable of transmitting more than two bits (e.g., PUCCH format 2) is used.

As described above, according to the present embodiment, even when the TB size increases based on the methods described in Embodiment 1, for example, the number of CBGs also increases according to the increase in TB size, so that deterioration of the retransmission efficiency can be suppressed. Additionally, for example, since the number of CBGs increases as the TB size increases, the number of ACK/NACK bits per transmission data does not increase; thus, overhead of ACK/NACK can be suppressed.

(Embodiment 3)

In the present embodiment, a TB size may be configured (or determined) based on the number of slots (e.g., the number of time sections) used for transmission of downlink data (e.g., PDSCH) or uplink data (e.g., PUSCH), for example.

[Configuration Example of Base Station]

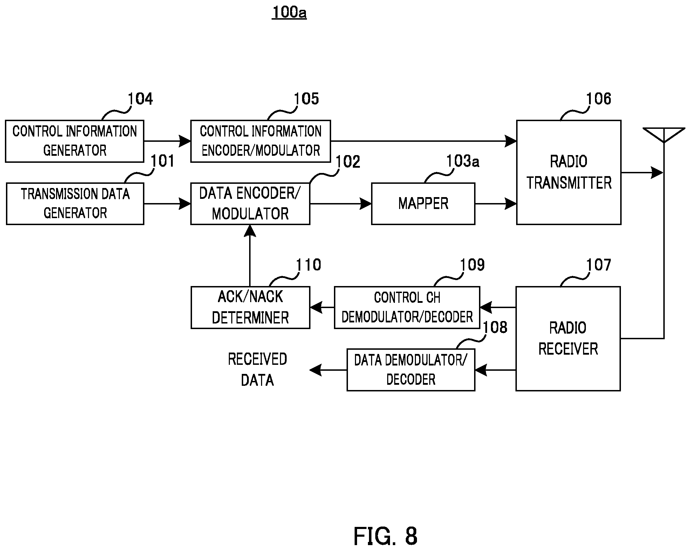

FIG. 8 is a block diagram illustrating an example of a configuration of base station 100a according to the present embodiment. In FIG. 8, elements that are substantially the same as those in base station 100 of Embodiment 1 are given the same reference signs. For example, base station 100a may include mapper 103a instead of Repetitioner 103 of Embodiment 1.

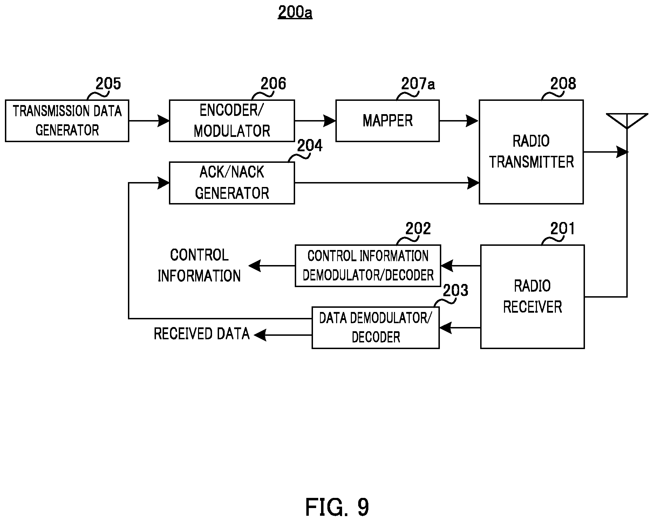

Base station 100a may transmit, to terminal 200a (see, e.g., FIG. 9 described later), downlink data transmitted over multiple slots for downlink (e.g., also referred to as PDSCH, for example, multi-slot PDSCH). Here, the configuration on the number of slots used for PDSCH transmission may be indicated to terminal 200a by at least one of the DCI and RRC signaling, for example.

Transmission data generator 101 determines a TB size based on the number of slots used for the PDSCH transmission, for example. An exemplary determination method of the TB size in base station 100a will be described later.

Mapper 103a maps the modulated data to time-domain and frequency-domain resources (e.g., subcarriers and OFDM symbols), over the slots in number configured for the PDSCH transmission, for example. Mapper 103a may perform mapping to a resource for RS such as a demodulation reference signal (DMRS), for example.

Further, base station 100a may receive uplink data transmitted by terminal 200 over multiple slots (e.g., also referred to as PUSCH, for example, multi-slot PUSCH), for example. Data demodulator/decoder 108 performs a channel estimation and demodulation/decoding processing on the received PUSCH signal, for example. By way of example, data demodulator/decoder 108 may perform the channel estimation by using the DMRS mapped to the multiple slots. Moreover, in the decoding processing, data demodulator/decoder 108 may perform the decoding processing, assuming the TB size that is based on the number of slots used for PUSCH transmission, for example.

[Exemplary Configuration of Terminal]

FIG. 9 is a block diagram illustrating an example of a configuration of terminal 200a according to the present embodiment. In FIG. 9, elements that are substantially the same as those in base station 100 of Embodiment 1 are given the same reference numerals. For example, terminal 200a may include mapper 207a instead of Repetitioner 207 of Embodiment 1.

Terminal 200a may transmit, to base station 100a, the uplink data (e.g., PUSCH) with the time-domain and frequency-domain resources allocated by base station 100a over the multiple slots, for example. Here, the configuration on the number of slots used for PUSCH transmission may be indicated to terminal 200a by at least one of the DCI and the RRC signaling, for example.

Transmission data generator 205 determines a TB size based on the number of slots used for the PUSCH transmission, for example. An exemplary determination method of the TB size in terminal 200a will be described later.

Mapper 207a maps the modulated data to time-domain and frequency-domain resources (e.g., subcarriers and OFDM symbols), over the slots in number configured for the PUSCH transmission, for example. Mapper 207a may perform mapping to a resource for RS such as DMRS, for example.

Further, terminal 200a may receive the downlink data transmitted by base station 100a over the multiple slots (e.g., PDSCH), for example. Data demodulator/decoder 203 performs a channel estimation and demodulation/decoding processing on the received PDSCH signal, for example. By way of example, data demodulator/decoder 203 may perform the channel estimation by using the DMRS mapped to the multiple slots. Moreover, in the decoding processing, data demodulator/decoder 203 may perform the decoding processing, assuming the TB size that is based on the number of slots used for PDSCH transmission, for example.

[Determination Method of TB size]

An exemplary determination method of the TB size in the present embodiment will be described.

As with Embodiment 1, a TB size may be configured based on "$N_{info}$" represented by Equation 1 described in TS38.214 V16.1.0 section 5.1.3 (PDSCH) and 6.1.4 (PUSCH), for example. In the present embodiment, base station 100a and terminal 200a determine a value of $N_{info}$, based on the number of slots used for transmission of PDSCH or PUSCH, for example.

By way of example, base station 100a and terminal 200a may calculate a value that is based on the number of slots used for the transmission of PDSCH or PUSCH (i.e., transmission signal or received signal), with respect to $N_{RE}$ (the number of REs used for data transmission) included in a calculation expression of $N_{info}$ (e.g., Equation 1). For example, $N_{RE}$ may be represented by the following Equation 4.

[4]

$$N_{RE} = \min\left(156, N_{RE}^{'}\right) \cdot n_{PRB} \quad \text{... (Equation 4)}$$

In Equation 4, $N_{RE}^{'}$ indicates the number of REs in one resource block (RB) or the number of REs in one Physical Resource Block (PRB), in the slot used for data transmission, and $n_{PRB}$ indicates the number of resource blocks allocated to data. Further, in Equation 4, for example, an upper limit of the number of REs in the slot used for TB size calculation is set to 156 so that the TB size does not exceed a data rate supported by terminal 200a. Note that the upper limit value is not limited to 156.

Hereinafter, two methods (e.g., Calculation method A and Calculation method B) will be each described as an exemplary calculation method of the number of REs ($N_{RE}$s) in the present embodiment.

<Calculation Method A>

In Calculation Method A, $N_{RE}$ may be calculated according to the following Equation 5.
[5]

$$N_{RE} = \min(156 \cdot N_{slot}, N'_{RE}) \cdot n_{PRB} \quad ... \text{ (Equation 5)}$$

In Equation 5, N'$_{RE}$ indicates the number of REs to be allocated, in multiple slots used for data (e.g., PDSCH or PUSCH) transmission. In one example, N'$_{RE}$ may indicate the total value of the numbers of REs, each number in one resource block, respectively in $N_{slot}$ slots used for the data transmission. Further, in Equation 5, $N_{slot}$ indicates the number of slots used for the data (e.g., PDSCH or PUSCH) transmission.

For example, N'$_{RE}$ may be calculated according to the following Equation 6.
[6]

$$N'_{RE} = N_{SC}^{RB} \cdot N_{symbol}^{sh} - N_{DMRS}^{PRB} - N_{oh}^{PRB} \quad ... \text{ (Equation 6)}$$

- $N_{SC}^{RB}$ : number of subcarriers (= 12) per resource block

- $N_{symbol}^{sh}$ : number of OFDM symbols assigned to PDSCH/PUSCH transmission over multiple slots

- $N_{DMRS}^{PRB}$ : number of resource elements of DMRS per resource block in slot section assigned to PDSCH/PUSCH transmission

- $N_{oh}^{PRB}$ : overhead factor to be indicated to terminal by higher layer (RRC layer)

For example, $N_{SC}^{RB}$ may be $N_{SC}^{RB}$ = 12 or may be other values. $N_{oh}^{PRB}$ may be indicated to terminal 200a by "PDSCH-ServingCellConfig" for PDSCH and "PUSCH-ServingCellConfig" for PUSCH, for example. Further, overhead factor $N_{oh}^{PRB}$ may be a factor to take into account overhead of a signal different from DMRS, and the factor is defined as {0, 6, 12, or 18} in Rel. 15/16 NR, for example.

Meanwhile, in the present embodiment, the overhead factor, $N_{oh}^{PRB}$, may be enhanced by adding a value for multiple-slot transmission or multiplying a factor. For example, as the factor, the number of slots, $N_{slot}$, used for the data transmission may be applied, where N'$_{RE}$ may be calculated according to the following Equation 7.
[7]

$$N'_{RE} = N_{SC}^{RB} \cdot N_{symbol}^{sh} - N_{DMRS}^{PRB} - N_{oh}^{PRB} \cdot N_{slot} \quad ... \text{ (Equation 7)}$$

With Equation 7, the conventional overhead factor defined by Rel.15/16 can be used, which eliminates the need for a new indication, thereby simplifying the processing and reducing indication overhead.

Meanwhile, N'$_{RE}$ may be calculated according to the following Equation 8 as a variation of calculation of N'$_{RE}$.
[8]

$$N'_{RE} = N_{SC}^{RB} \cdot N_{symbol}^{sh} - (N_{DMRS}^{PRB} + N_{oh}^{PRB}) \cdot N_{slot} \quad ... \text{ (Equation 8)}$$

In Equation 8, $N_{DMRS}^{PRB}$ indicates the number of resource elements of a DMRS in a resource block per slot assigned for the transmission of PDSCH or PUSCH. With Equation 8, $N_{DMRS}^{PRB}$ and $N_{oh}^{PRB}$ defined in Rel. 15/16 NR can be applied even in the multiple-slot transmission, which makes it possible to simplify the processing in terminal 200a, for example.

In Equation 6 or Equation 7, $N_{DMRS}^{PRB}$ indicates the number of resource elements of a DMRS per resource block in a slot section ($N_{slot}$ section) assigned for the transmission of PDSCH or PUSCH. For this reason, for example, even when the number of DMRSs is configured individually for a slot (e.g., the number is different for each slot), the correct number of resource elements of each DMRS can be expressed, and thus, base station 100a and terminal 200a can more accurately compute the number of resource elements (i.e., N'$_{RE}$) used for the data transmission.

According to Equation 5, N'$_{RE}$, which is the total value of the number of REs used for the data transmission in each of the multiple slots, is used for the TB size calculation, and thus, base station 100a and terminal 200a can configure the TB size corresponding to the number of slots used for the data transmission.

In addition, for example, even when the number of REs differs slot by slot, the total number, N'$_{RE}$, of the number of REs in the multiple slots is used to calculate the TB size; thus, base station 100a and terminal 200a can configure the TB size, based on an accurate N$_{RE}$ value in the multiple slots.

Further, a value obtained by multiplying the upper limit value (i.e., 156) of the number of REs in a slot by the number of slots, N$_{slot}$, is configured as an upper limit value of N$_{RE}$, which suppresses a situation where the TB size is configured to be extremely large depending on a value taken by N'$_{RE}$.

<Calculation Method B>

In Calculation Method B, N$_{RE}$ may be calculated according to the following Equation 9.

[9]

$$N_{RE} = \min\left(156 \cdot N_{slot}, N'_{RE} \cdot N_{slot}\right) \cdot n_{PRB} \ \dots \text{(Equation 9)}$$

In Equation 9, N'$_{RE}$ indicates the number of REs in one resource block per slot of the multiple slots used for the data (PDSCH or PUSCH) transmission. Further, N$_{slot}$ indicates the number of slots used for the data (e.g., PDSCH or PUSCH) transmission.

Calculation Method B may assume that the number of REs per resource block in each of the multiple slots used for the data transmission is the same, for example. In contrast, when the number of REs per resource block in each of the multiple slots used for the data transmission is different, the number of REs in a slot with a smaller (e.g., smallest) number of REs may be applied to N'$_{RE}$, or the number of REs in a particular slot such as the head slot (e.g., also called first slot) or the last slot may be applied to N'$_{RE}$, for example. Alternatively, a value based on the mean value of the numbers of REs respectively in the multiple slots may be applied to N'$_{RE}$.

In Calculation Method B, the number of REs in one slot is used for the TB size calculation; therefore, the TB size can be calculated more simply as compared to Calculation Method A.

Note that, instead of Equation 9, N$_{RE}$ may be calculated according to the following Equation 10.

[10]

$$N_{RE} = \min\left(156, N'_{RE}\right) \cdot n_{PRB} \cdot N_{slot} \ \dots \text{(Equation 10)}$$

Calculation Method A and Calculation Method B have been each described, thus far.

In Calculation Method A and Calculation Method B, a description has been given of an example of the min computation in which the upper limit of the number of REs in one slot is set to 156, but the N$_{RE}$ calculation method is not limited to this example. In one example, the upper limit value of the number of REs in one slot may be a value other than 156. For example, in a section of one slot, the number of resource elements in one resource block is 168 (= 12 subcarriers × 14 symbols). Of the 168 resource elements, resource elements (= 12) for one symbol corresponds to overhead such as DMRS, and the remaining 156 pieces are defined as the upper limit of the number of resource elements to be assigned to the data. For example, when multiple slots are transmitted, the upper limit of the number of resource elements may be set to 156 in a particular slot (e.g., the first slot), whereas the upper limit of the number of resource elements may be set to 168 in the other slots (e.g., the second and subsequent slots). In this case, the min computation in the N$_{RE}$ calculation expression may be replaced with min (156 + 12•14•(N$_{slot}$ - 1) , N'$_{RE}$). In the manner described above, for example, when overhead such as DMRS is mapped to the first symbol while being not mapped to the other symbols in the multiple slots used for data transmission, the upper limit value of the number of resource elements can be appropriately configured.

Alternatively, for example, the upper limit value of the number of resource elements may not be configured. In this case, for example, N$_{RE}$ may be calculated according to "N$_{RE}$ = N'$_{RE}$•n$_{PRB}$" in Calculation Method A, or may be calculated according to "N$_{RE}$ = N'$_{RE}$•N$_{slot}$• n$_{PRB}$" in Calculation Method B.

According to the TB size configuration methods of the present embodiment, base station 100a and terminal 200a configure a TB size that is according to the number of slots used for the data (PDSCH or PUSCH) transmission, for example. In other words, base station 100a and terminal 200a determine a TB size, based on information related to a resource amount (e.g., the number of slots) used for the data (e.g., transmission signal). In one example, the more slots are used for the data transmission, the more information bits are transmitted in the respective slots used for the data transmission. This TB size configuration enables an increase in the data amount that can be transmitted in one HARQ process, so that throughput can be improved even with a defined (e.g., limited) number of HARQ processes.

Further, in the present embodiment, the TB size is configured according to the number of slots used for the data (e.g., PDSCH or PUSCH) transmission. In consequence, for example, the number of information bits (e.g., data amount) to be transmitted also increases as the number of slots increases, so that throughput can be improved while suppressing an increase in the number of resource blocks, that is, suppressing a decrease of the transmission power density (PSD: Power spectrum density). This enables data transmission with suppressing the decrease of the PSD, and thus, for example, a coverage area can be extended over which a certain data rate can be achieved.

Further, since data allocation can be indicated to terminal 200a by one DCI for the plurality of slots, control overhead can be reduced, for example. Moreover, it is possible to suppress consumption of an HARQ process (i.e., increase in number of HARQ processes to be used), and thus, the terminal can be simplified by reducing the number of HARQ processes.

Further, in Repetition, the data transmission reception processing such as encoding or modulation is performed individually for a slot, but in the present embodiment, base station 100a and terminal 200a can perform, in the data (e.g., PDSCH or PUSCH) transmission over multiple slots, the channel estimation and the demodulation/decoding processing collectively on these slots, resulting in improvement of the channel estimation accuracy and reduction of an error rate, for example.

Further, among the multiple slots used for the data transmission, DMRS may be mapped to a particular slot (e.g., head slot), and DMRS may not be mapped to the other slots, for example. This DMRS mapping allows base station 100a and terminal 200a to transmit more data. Therefore, according to the present embodiment, even when the DMRS mapping is configured individually for a slot (e.g., different for each slot), the TB size can be appropriately configured.

Incidentally, the number of slots used for the data (e.g., PDSCH or PUSCH) transmission may be replaced with, for example, "the number of slots to be a unit of TB processing."

Moreover, the plurality of slots used for the data (e.g., PDSCH or PUSCH) transmission may be temporally consecutive slots or non-consecutive slots. Further, the frequency resource (e.g., resource block) to which the data is assigned in each of the plurality of slots may be configured individually (e.g., to be different resources).

Further, the number of times of Repetition may be configured as the number of slots, $N_{slot}$. In other words, the number of slots, $N_{slot}$, may correspond to the number of times of Repetition.

Meanwhile, the present embodiment may be combined with Embodiment 1 (or Embodiment 2). By way of example, base station 100a and terminal 200a may determine the TB size, based on information on at least one of the number of times of Repetition of the data (e.g., the number of times of repetitions of transmission signal), the scaling factor, and the number of slots used for the data transmission (e.g., the number of time sections). As an example, in the TB size calculation methods according to the present embodiment, the calculated $N_{info}$ may be further multiplied by the scaling factor. In one example, multiplying $N_{info}$ by a scaling factor less than one allows data transmission with a lower MCS (or Spectral Efficiency), and the coverage area can be thus extended.

Further, the number of slots, $N_{slot}$, may be an integer or a decimal. For example, in a case where $N_{slot}$ = 2.5, two slots and a half-slot (half of a slot) may be used for the data (e.g., PDSCH or PUSCH) transmission. The number of slots, $N_{slot}$, may be represented by the number of symbols used for the data transmission. For example, a case where $N_{slot}$ = 2 may be represented by 28 symbols, and a case where $N_{slot}$ = 2.5 may be represented by 42 symbols.

Embodiments of the present disclosure have been each described, thus far.

An exemplary embodiment of the present disclosure is also applicable to any type of satellite, such as GEOs, medium orbit satellites (Medium Earth Orbit (MEO) satellites), LEOs, or high orbit satellites (Highly Elliptical Orbit (HEO) satellites). Further, an exemplary embodiment of the present disclosure may be applied to non-terrestrial communication such as that performed by a HAPS or a drone base station.

Further, note that the embodiments described above have been described by taking the NTN environment (e.g., a satellite communication environment) as an example, but the present disclosure is not limited thereto. The present disclosure may be applied to other communication environments (e.g., terrestrial cellular environment in LTE and/or NR). For example, the present disclosure may be applied to terrestrial communication with a large cell size and a large propagation-delay between a base station and a terminal. Meanwhile, the higher the carrier frequency is, the wider the subcarrier spacing (SCS) is, and thus, a slot length may be shorter, for example. The shorter the slot length is, the larger the number of slots in an RTT is, and thus, it is desired to configure a larger number of HARQ processes. For this reason, an exemplary embodiment of the present disclosure may be applied to, for example, a system where the higher carrier frequency of the terrestrial communication (e.g., system of 52.6 GHz or higher).

In addition, the shorter the slot length is, decoding-attempt frequency (or number of times) of the control information (e.g., PDCCH) may be reduced to a frequency (or number of times) such as once (or less than the number of slots) for the multiple slots, instead of the slot-unit, for the purpose of reducing terminal throughput or power consumption. Even in this case, as in the above-described embodiments, the TB size determination, which is based on the number of slots to which the data to be transmitted in the multiple slots is assigned, enables data transmission with the data amount that is according to the number of slots, thereby improving throughput. Further, in the above-described embodiments, the data transmission using the multiple slots enables extension of the coverage area capable of achieving a certain data rate, in addition to throughput improvement; therefore, an exemplary embodiment of the present disclosure may be applied to terrestrial communication different from the above-described communication.

Further, in the embodiments described above, as an example ,a case has been described where the data assignment (e.g., scheduling) is indicated to terminal 200 by the DCI, but the present disclosure is not limited to this case. An exemplary embodiment of the present disclosure may also be applied to, for example, Semi-persistent scheduling for performing scheduling periodically in advance, or transmission using Configured Grant. By way of example, a scaling factor may be indicated to (or configured for) terminal 200 by the RRC message "SPS-Config" for the Semi-persistent scheduling. Alternatively, a scaling factor may be indicated to (or configured for) terminal 200 by the RRC message "configuredGrantConfig" for the Configured uplink grant.

ACK/NACK may also be referred to as, for example, HARQ-ACK or HARQ-Feedback information.

Repetition may also be referred to as, for example, slot aggregation, slot bundling, TTI aggregation, or TTI bundling.

Further, the number of times of Repetition in Embodiment 1 and Embodiment 2 may be replaced with the number of slots, $N_{slot}$, used for data transmission (PDSCH or PUSCH). In other words, the number of times of Repetition may correspond to the number of slots, $N_{slot}$.

Further, in the embodiments described above, a description has been given of transmission of both downlink data (e.g., PDSCH) and uplink data (e.g., PUSCH); however, an exemplary embodiment of the present disclosure may be applied to either downlink data or uplink data and may not be applied to the other.

Further, in the above-described embodiments, the mode of the satellite communication may be a mode in which the function of the base station exists on the satellite (for example, "regenerative satellite"), or a mode in which the function of the base station exists on the ground and the satellite relays the communication between the base station and the terminal (for example, "transparent satellite"). In other words, for example, in an exemplary embodiment of the present disclosure, the downlink and uplink may be links between a terminal and a satellite or links via a satellite.

The term, such as "part" or "portion" or the term ending with a suffix, such as "-er" "-or" or "-ar" may be replaced with another term, such as "circuit (circuitry)," "device," "unit," or "module."

(Control Signal)

In the present disclosure, the downlink control signal (or downlink control information) according to an exemplary embodiment of the present disclosure may be a signal (or information) transmitted in a Physical Downlink Control Channel (PDCCH) in a physical layer, for example, or may be a signal (or information) transmitted in a Medium Access Control Control Element (MAC CE) or a Radio Resource Control (RRC) in a higher layer. Further, the signal (or information) is not limited to that notified by the downlink control signal, but may be predefined in the specifications (or standard) or may be pre-configured for the base station and the terminal.

In the present disclosure, the uplink control signal (or uplink control information) according to an exemplary embodiment of the present disclosure may be, for example, a signal (or information) transmitted in a PUCCH of the physical layer or a signal (or information) transmitted in the MAC CE or RRC of the higher layer. Further, the signal (or information) is not limited to that notified by the uplink control signal, and may be predefined in the specifications (or standard) or may be pre-configured for the base station and the terminal. The uplink control signal may be replaced with, for example, uplink control information (UCI), 1st stage sidelink control information (SCI), or 2nd stage SCI.

(Base Station)

In an exemplary embodiment of the present disclosure, the base station may be a Transmission Reception Point (TRP), a cluster head, an access point, a Remote Radio Head (RRH), an eNodeB (eNB), a gNodeB (gNB), a Base Station (BS), a Base Transceiver Station (BTS), a master device, a gateway, or the like. In sidelink communication, a terminal may be used instead of the base station. Further, instead of the base station, a relay apparatus that relays communication between a higher node and a terminal may be used. Moreover, a road side device may be used.

(Uplink/Downlink/Sidelink)

An exemplary embodiment of the present disclosure may be applied to, for example, any of an uplink, a downlink, and a sidelink. For example, an exemplary embodiment of the present disclosure may be applied to a Physical Uplink Shared Channel (PUSCH), a Physical Uplink Control Channel (PUCCH), and a Physical Random Access Channel (PRACH) in the uplink, a Physical Downlink Shared Channel (PDSCH), PDCCH or a Physical Broadcast Channel (PBCH) in the downlink, or a Physical Sidelink Shared Channel (PSSCH), a Physical Sidelink Control Channel (PSCCH), a Physical Sidelink Broadcast Channel (PSBCH) in the sidelink.

Note that the PDCCH, PDSCH, PUSCH and PUCCH are one examples of a downlink control channel, a downlink data channel, an uplink data channel, and an uplink control channel, respectively. The PSCCH and PSSCH are one examples of a sidelink control channel and a sidelink data channel. Further, PBCH and PSBCH are broadcast channels, and PRACH is an exemplary random access channel.

(Data Channel/Control Channel)

An exemplary embodiment of the present disclosure may be applied to, for example, either of a data channel or a control channel. For example, a channel in an exemplary embodiment of the present disclosure may be replaced with any one of the PDSCH, PUSCH, and PSSCH being the data channels or the PDCCH, PUCCH, PBCH, PSCCH, and PSBCH being the control channels.

(Reference Signal)

In an exemplary embodiment of the present disclosure, a reference signal is a signal known to both of a base station and a mobile station, for example, and may also be referred to as a Reference Signal (RS) or a pilot signal. The reference signal may be any of a Demodulation Reference Signal (DMRS), a Channel State Information-Reference Signal (CSI-RS), a Tracking Reference Signal (TRS), a Phase Tracking Reference Signal (PTRS), a Cell-specific Reference Signal (CRS), or a Sounding Reference Signal (SRS).

(Time Interval)

In an exemplary embodiment of the present disclosure, the units of time resources are not limited to one or a combination of slots and symbols, but may be time resource units such as, for example, frames, superframes, subframes, slots, time slot subslots, minislots, or symbols, Orthogonal Frequency Division Multiplexing (OFDM) symbols, Single Carrier-Frequency Division Multiplexing (SC-FDMA) symbols, or other time resource units. The number of symbols included in one slot is not limited to the number of symbols exemplified in the above-described embodiments, and may be another number of symbols.

(Frequency Band)

An exemplary embodiment of the present disclosure may be applied to either a licensed band or an unlicensed band.

(Communication)

An exemplary embodiment of the present disclosure may be applied to any of communication between a base station and a terminal (Uu link communication), communication between a terminal and a terminal (Sidelink communication), and communication of a Vehicle to Everything (V2X). For example, the channel in an exemplary embodiment of the present disclosure may be replaced with the PSCCH, PSSCH, Physical Sidelink Feedback Channel (PSFCH), PSBCH, PDCCH, PUCCH, PDSCH, PUSCH, or PBCH.

In addition, an exemplary embodiment of the present disclosure may be applied to either of a terrestrial network or a network other than the terrestrial network using a satellite or a High Altitude Pseudo Satellite (HAPS) (Non-Terrestrial Network (NTN)). Further, an exemplary embodiment of the present disclosure may be applied to a terrestrial network having a larger transmission delay in comparison to a symbol length or a slot length, such as a network having a large cell size or an ultra-wideband transmission network.

(Antenna Port)

In an exemplary embodiment of the present disclosure, an antenna port refers to a logical antenna (antenna group) composed of one physical antennas or a plurality of physical antennas. For example, the antenna port does not necessarily refer to one physical antenna, and may refer to an array antenna including a plurality of antennas. For example, it is not defined how many physical antennas the antenna port is composed of, and the number of physical antennas may be defined as the smallest unit allowing a terminal station to transmit a Reference signal. Also, the antenna port may be defined as the smallest unit multiplied by a weight of a precoding vector.

<5G NR System Architecture and Protocol Stack>

3GPP has been working at the next release for the 5th generation cellular technology, simply called 5G, including the development of a new radio access technology (NR) operating in frequencies ranging up to 100 GHz. The first version of the 5G standard was completed at the end of 2017, which allowed proceeding to 5G NR standard-compliant trials and commercial deployments of terminals (e.g., smartphones).

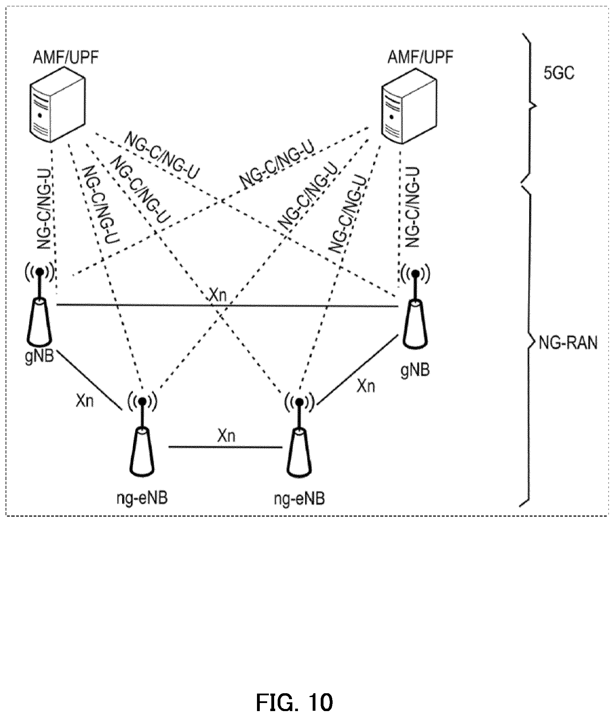

For example, the overall system architecture assumes an NG-RAN (Next Generation-Radio Access Network) that includes gNBs. The gNB provides the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 10 (see e.g., 3GPP TS 38.300 v15.6.0, section 4).

The user plane protocol stack for NR (see e.g., 3GPP TS 38.300, section 4.4.1) includes the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC, and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. Examples of the physical channel include a Physical Random Access Channel (PRACH), a Physical Uplink Shared Channel (PUSCH), and a Physical Uplink Control Channel (PUCCH) as uplink physical channels, and a Physical Downlink Shared Channel (PDSCH), a Physical Downlink Control Channel (PDCCH), and a Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20 Gbps for downlink and 10 Gbps for uplink) and user-experienced data rates in the order of three times what is offered by IMT-Advanced. On the other hand, in case of URLLC, the tighter requirements are put on ultra-low latency (0.5 ms for UL and DL each for user plane latency) and high reliability ($1-10^{-5}$ within 1 ms). Finally, mMTC may preferably require high connection density (1,000,000 devices/km2 in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, and number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15 kHz, 30 kHz, 60 kHz... are being considered at the moment. The symbol duration Tu and the subcarrier spacing $\Delta f$ are directly related through the formula $\Delta f = 1/Tu$. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0).

<Functional Split between NG-RAN and 5GC in 5G NR>

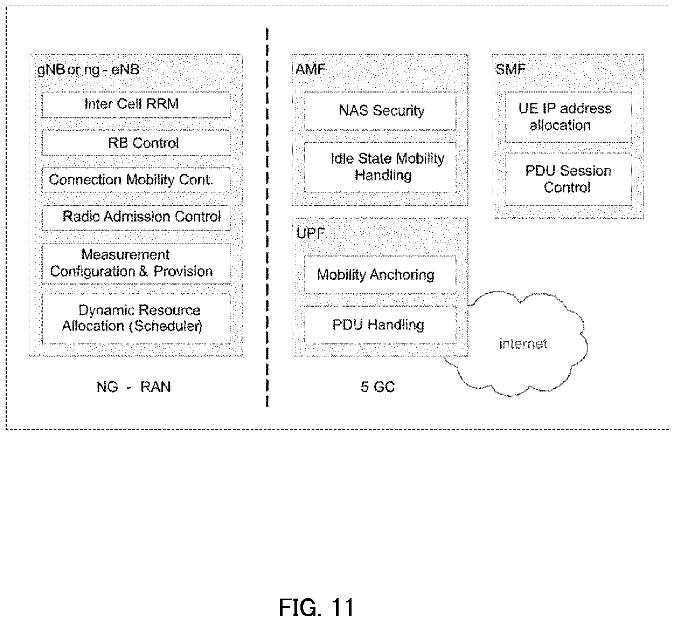

FIG. 11 illustrates the functional split between the NG-RAN and the 5GC. A logical node of the NG-RAN is gNB or ng-eNB. The 5GC includes logical nodes AMF, UPF, and SMF.

For example, gNB and ng-eNB hosts the following main functions:

- Radio Resource Management functions such as Radio Bearer Control, Radio Admission Control, Connection Mobility Control, and dynamic allocation (scheduling) of both uplink and downlink resources to a UE;
- IP header compression, encryption, and integrity protection of data;
- Selection of an AMF during UE attachment in such a case when no routing to an AMF can be determined from the information provided by the UE;
- Routing user plane data towards the UPF;
- Routing control plane information towards the AMF;
- Connection setup and release;
- Scheduling and transmission of paging messages;
- Scheduling and transmission of system broadcast information (originated from the AMF or an action management maintenance function (OAM: Operation, Admission, Maintenance));
- Measurement and measurement reporting configuration for mobility and scheduling;
- Transport level packet marking in the uplink;
- Session management;
- Support of network slicing;
- QoS flow management and mapping to data radio bearers;
- Support of UEs in the RRC_INACTIVE state;
- Distribution function for NAS messages;
- Radio access network sharing;
- Dual connectivity; and
- Tight interworking between NR and E-UTRA.

The Access and Mobility Management Function (AMF) hosts the following main functions:

- Function of Non-Access Stratum (NAS) signaling termination;
- NAS signaling security;
- Access Stratum (AS) security control;
- Inter-Core Network (CN) node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing; and
- Session Management Function (SMF) selection.

In addition, the User Plane Function (UPF) hosts the following main functions:

- Anchor Point for intra-linter-RAT mobility (when applicable);
- External Protocol Data Unit (PDU) session point for interconnection to a data network;
- Packet routing and forwarding;
- Packet inspection and a user plane part of Policy rule enforcement;
- Traffic usage reporting;
- Uplink classifier to support routing traffic flows to a data network;
- Branching point to support multi-homed PDU session;
- QoS handling for user plane (e.g., packet filtering, gating, UL/DL rate enforcement);
- Uplink traffic verification (SDF to QoS flow mapping); and
- Function of downlink packet buffering and downlink data notification triggering.

Finally, the Session Management Function (SMF) hosts the following main functions:

- Session management;
- UE IP address allocation and management;
- Selection and control of UPF;
- Configuration function for traffic steering at the User Plane Function (UPF) to route traffic to a proper destination;
- Control part of policy enforcement and QoS; and
- Downlink data notification.

<RRC Connection Setup and Reconfiguration Procedure>

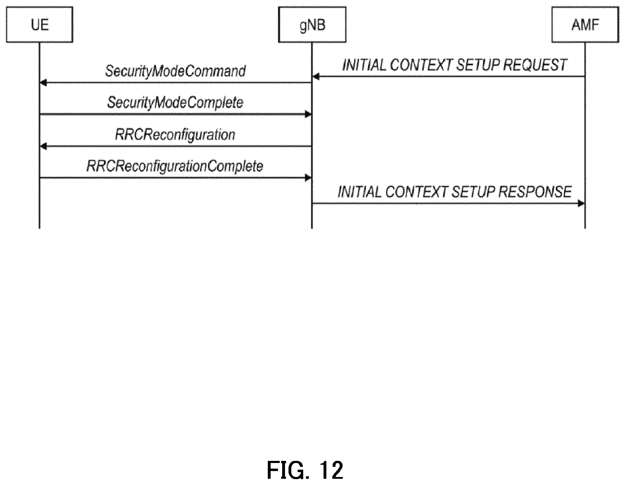

FIG. 12 illustrates some interactions between a UE, gNB, and AMF (a 5GC Entity) performed in the context of a transition of the UE from RRC_IDLE to RRC_CONNECTED for the NAS part (see TS 38 300 v15.6.0).

The RRC is higher layer signaling (protocol) used to configure the UE and gNB. With this transition, the AMF prepares UE context data (which includes, for example, a PDU session context, security key, UE Radio Capability, UE Security Capabilities, and the like) and sends it to the gNB with an INITIAL CONTEXT SETUP REQUEST. Then, the gNB activates the AS security with the UE. This activation is performed by the gNB transmitting to the UE a Security-ModeCommand message and by the UE responding to the gNB with the SecurityModeComplete message. Afterwards, the gNB performs the reconfiguration to setup the Signaling Radio Bearer 2, SRB2, and Data Radio Bearer (s), DRB (s) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB informs the AMF that the setup procedure is completed with INITIAL CONTEXT SETUP RESPONSE.

Thus, the present disclosure provides a 5th Generation Core (5GC) entity (e.g., AMF, SMF, or the like) including control circuitry, which, in operation, establishes a Next Generation (NG) connection with a gNodeB, and a transmitter, which, in operation, transmits an initial context setup message to the gNodeB via the NG connection such that a signaling radio bearer between the gNodeB and a User Equipment (UE) is configured up. Specifically, the gNodeB transmits Radio Resource Control (RRC) signaling including a resource allocation configuration Information Element (IE) to the UE via the signaling radio bearer. Then, the UE performs an uplink transmission or a downlink reception based on the resource allocation configuration.

<Usage Scenarios of IMT for 2020 and beyond>

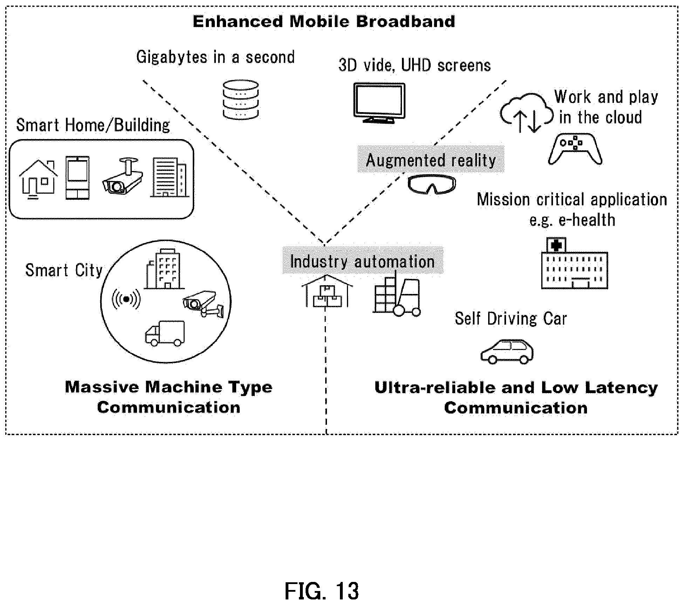

FIG. 13 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 13 illustrates some examples of envisioned usage scenarios for IMT for 2020 and beyond (see e.g., ITU-R M.2083 FIG. 2).

The URLLC use case has stringent requirements for capabilities such as throughput, latency and availability. The URLLC use case has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements configured by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1 ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency/higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, for example, for URLLC and mMTC, is high reliability or ultra-reliability. Several mechanisms can improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability improvement in general, regardless of particular communication scenarios.

For NR URLLC, further use cases with tighter requirements have been identified such as factory automation, transport industry and electrical power distribution. The tighter requirements are higher reliability (up to 10-6 level), higher availability, packet sizes of up to 256 bytes, time synchronization down to the order of a few $\mu$s where the value can be one or a few $\mu$s depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements are possible. The term "mini-slot" refers to a Transmission Time Interval (TTI) including a smaller number of symbols than a slot (a slot comprising fourteen symbols).

<QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearer (DRB) together with the PDU Session, e.g., as illustrated above with reference to FIG. 12. Further, additional DRB (s) for QoS flow (s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

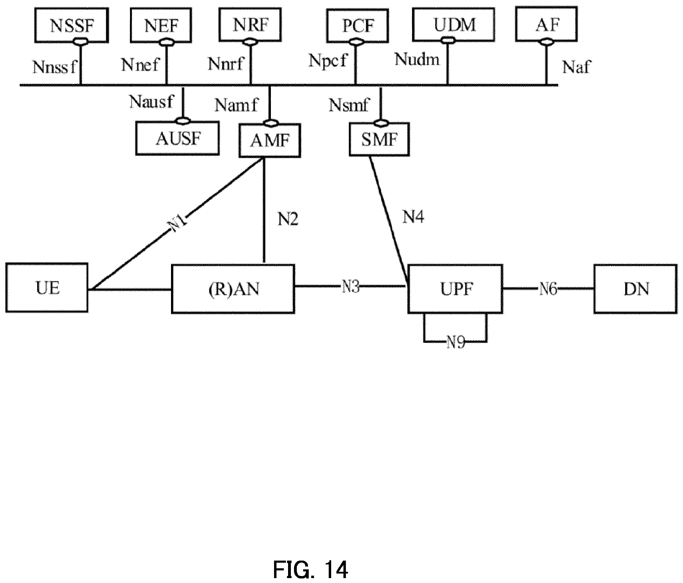

FIG. 14 illustrates a 5G NR non-roaming reference architecture (see TS 23.501 v16.1.0, section 4.23). An Application Function (AF), e.g., an external application server hosting 5G services, exemplarily described in FIG. 13, interacts with the 3GPP Core Network in order to provide services, for example to support application influence on traffic routing, accessing Network Exposure Function (NEF) or interacting with the Policy framework for policy control (see Policy Control Function, PCF), e.g., QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

FIG. 14 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g., operator services, Internet access or 3rd party services. All of or a part of the core network functions and the application services may be deployed and running on cloud computing environments.

In the present disclosure, thus, an application server (for example, AF of the 5G architecture), is provided that includes: a transmitter, which, in operation, transmits a request containing a QoS requirement for at least one of URLLC, eMMB and mMTC services to at least one of functions (for example NEF, AMF, SMF, PCF,UPF, etc.) of the 5GC to establish a PDU session including a radio bearer between a gNodeB and a UE in accordance with the QoS requirement; and control circuitry, which, in operation, performs the services using the established PDU session.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto.

The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

When future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

A communication apparatus according to an exemplary embodiment of the present disclosure includes: control circuitry, which, in operation, performs determination of a data size, based on information on at least one of the number of times of repetition of a transmission signal and/or a scaling factor for a unit data size in the repetition; and transmission circuitry, which, in operation, performs transmission of the transmission signal, based on the data size.

In an exemplary embodiment of the present disclosure, the information indicates the number of time sections for the repetition.

In an exemplary embodiment of the present disclosure, in the determination of the data size, the control circuitry performs the determination based on the number of times of the repetition in a case where retransmission control is applied, whereas the control circuitry performs the determination not based on the number of times of the repetition in a case where the retransmission control is not applied.

In an exemplary embodiment of the present disclosure, in the determination of the data size, the control circuitry performs the determination based on the scaling factor in a case where the repetition is applied, whereas the control circuitry performs the determination not based on the scaling factor in a case where the repetition is not applied.

In an exemplary embodiment of the present disclosure, the control circuitry determines the data size, in at least one retransmission process to which the repetition is applied, among a plurality of retransmission processes.

In an exemplary embodiment of the present disclosure, in a case where the communication apparatus is a terminal, the terminal receives the information from a base station, and in a case where the communication apparatus is a base station, the base station transmits the information to a terminal.

In an exemplary embodiment of the present disclosure, the scaling factor is defined in information on time-domain resource allocation.

In an exemplary embodiment of the present disclosure, the scaling factor is defined in information including a scaling factor for paging and a random access.

In an exemplary embodiment of the present disclosure, the scaling factor is an integer value equal to or larger than one or a decimal value.

In an exemplary embodiment of the present disclosure, the control circuitry determines, based on the information, the number of groups of code blocks into which data included in the transmission signal is divided.

In an exemplary embodiment of the present disclosure, the control circuitry determines, based on the number of the groups, a resource amount of a response signal to the data.

A communication apparatus according to an exemplary embodiment of the present disclosure includes: control circuitry, which, in operation, performs determination of a data size, based on information on at least one of the number of times of repetition of a received signal and/or a scaling factor for a unit data size in the repetition; and reception circuitry, which, in operation, performs reception of the received signal, based on the data size.

A communication method according to an exemplary embodiment of the present disclosure includes: performing, by a communication apparatus, determination of a data size, based on information on at least one of the number of times of repetition of a transmission signal and/or a scaling factor for a unit data size in the repetition; and performing, by the communication apparatus, transmission of the transmission signal, based on the data size.

A communication method according to an exemplary embodiment of the present disclosure includes: performing, by a communication apparatus, determination of a data size, based on information on at least one of the number of times of repetition of a received signal and/or a scaling factor for a unit data size in the repetition; and performing, by the communication apparatus, reception of the received signal, based on the data size.

A communication apparatus according to an exemplary embodiment of the present disclosure includes: control circuitry, which, in operation, performs determination of a data size, based on information on the number of time sections used for a transmission signal; and transmission circuitry, which, in operation, performs transmission of the transmission signal, based on the data size.

In an exemplary embodiment of the present disclosure, the control circuitry determines the data size, based on the number of resource elements allocated to the transmission signal in at least one of the time sections used for the transmission signal.

In an exemplary embodiment of the present disclosure, the number of the time sections corresponds to the number of times of repetition of the transmission signal.

The disclosures of Japanese Patent Applications No. 2020-176833, filed on October 21, 2020 and No. 2021-005151, filed on January 15, 2021, including the specifications, drawings and abstracts, are incorporated herein by reference in their entireties.

Industrial Applicability

One aspect of the present disclosure is useful in radio communication systems.

Reference Signs List

100,100a Base station
101,205 Transmission data generator
102 Data encoder/modulator
103, 207 Repetitioner
103a, 207a Mapper
104 Control information generator
105 Control information encoder/modulator
106, 208 Radio transmitter
107, 201 Radio receiver
108, 203 Data demodulator/decoder
109 Control CH demodulator/decoder
110 ACK/NACK determiner
200, 200a Terminal
202 Control information demodulator/decoder
204 ACK/NACK generator
206 Encoder/modulator

**Claims**

1. A communication apparatus, comprising:

control circuitry, which, in operation, performs determination of a data size, based on information on at least one of the number of times of repetition of a transmission signal and/or a scaling factor for a unit data size in the repetition; and
transmission circuitry, which, in operation, performs transmission of the transmission signal, based on the data size.

2.  The communication apparatus according to claim 1, wherein the information indicates the number of time sections for the repetition.

3.  The communication apparatus according to claim 1, wherein, in the determination of the data size, the control circuitry performs the determination based on the number of times of the repetition in a case where retransmission control is applied, whereas the control circuitry performs the determination not based on the number of times of the repetition in a case where the retransmission control is not applied.

4.  The communication apparatus according to claim 1, wherein, in the determination of the data size, the control circuitry performs the determination based on the scaling factor in a case where the repetition is applied, whereas the control circuitry performs the determination not based on the scaling factor in a case where the repetition is not applied.

5.  The communication apparatus according to claim 1, wherein the control circuitry determines the data size based on the scaling factor, in at least one retransmission process to which the repetition is applied, among a plurality of retransmission processes.

6.  The communication apparatus according to claim 1, wherein, in a case where the communication apparatus is a terminal, the terminal receives the information from a base station, and in a case where the communication apparatus is a base station, the base station transmits the information to a terminal.

7.  The communication apparatus according to claim 1, wherein the scaling factor is defined in information on time-domain resource allocation.

8.  The communication apparatus according to claim 1, wherein the scaling factor is defined in information including a scaling factor for paging and a random access.

9.  The communication apparatus according to claim 1, wherein the scaling factor is an integer value equal to or larger than one or a decimal value.

10. The communication apparatus according to claim 1, wherein the control circuitry determines, based on the information, the number of groups of code blocks into which data included in the transmission signal is divided.

11. The communication apparatus according to claim 10, wherein the control circuitry determines, based on the number of the groups, a resource amount of a response signal to the data.

12. A communication apparatus, comprising:

    control circuitry, which, in operation, performs determination of a data size, based on information on at least one of the number of times of repetition of a received signal and/or a scaling factor for a unit data size in the repetition; and
    reception circuitry, which, in operation, performs reception of the received signal, based on the data size.

13. A communication method, comprising:

    performing, by a communication apparatus, determination of a data size, based on information on at least one of the number of times of repetition of a transmission signal and/or a scaling factor for a unit data size in the repetition; and
    performing, by the communication apparatus, transmission of the transmission signal, based on the data size.

14. A communication method, comprising:

    performing, by a communication apparatus, determination of a data size, based on information on at least one of the number of times of repetition of a received signal and/or a scaling factor for a unit data size in the repetition; and

performing, by the communication apparatus, reception of the received signal, based on the data size.

**15.** A communication apparatus, comprising:

control circuitry, which, in operation, performs determination of a data size, based on information on the number of time sections used for a transmission signal; and
transmission circuitry, which, in operation, performs transmission of the transmission signal, based on the data size.

**16.** The communication apparatus according to claim 15, wherein the control circuitry determines the data size, based on the number of resource elements allocated to the transmission signal in at least one of the time sections used for the transmission signal.

**17.** The communication apparatus according to claim 16, wherein the number of the time sections corresponds to the number of times of repetition of the transmission signal.

FIG. 1

100

CONTROLLER 11 ↔ COMMUNICATOR 12

FIG. 2

200

CONTROLLER 21 ↔ COMMUNICATOR 22

FIG. 3

FIG. 4

FIG. 5

BASE STATION 100                                                    TERMINAL 200

CONFIGURE INFORMATION ON
TB SIZE DETERMINATION          S101

S102

CONTROL
INFORMATION

DETERMINE TB SIZE    S103          DETERMINE TB SIZE    S104

S105

COMMUNICATION

**FIG. 6**

No repetition => 2 CBGs

Transport block (TB)

CB

CBG1    CBG2

2 ACK/NACKs per slot

2x repetition with 2x larger TB size => 4 CBGs

Transport block (TB)

CB

CBG1    CBG2    CBG3    CBG4

4 ACK/NACKs per 2 slots

FIG. 7

FIG. 8

EP 4 236 135 A1

<u>200a</u>

FIG. 9

FIG. 10

**gNB or ng - eNB**

| Inter Cell RRM |
| RB Control |
| Connection Mobility Cont. |
| Radio Admission Control |
| Measurement Configuration & Provision |
| Dynamic Resource Allocation (Scheduler) |

NG - RAN

**AMF**

| NAS Security |
| Idle State Mobility Handling |

**UPF**

| Mobility Anchoring |
| PDU Handling |

5 GC

**SMF**

| UE IP address allocation |
| PDU Session Control |

internet

# FIG. 11

FIG. 12

**Enhanced Mobile Broadband**

Gigabytes in a second

3D vide, UHD screens

Work and play in the cloud

Smart Home/Building

Augmented reality

Mission critical application e.g. e-health

Smart City

Industry automation

Self Driving Car

**Massive Machine Type Communication**

**Ultra-reliable and Low Latency Communication**

FIG. 13

FIG. 14

## INTERNATIONAL SEARCH REPORT

| International application No. |
| --- |
| PCT/JP2021/026327 |

### A. CLASSIFICATION OF SUBJECT MATTER

Int. Cl. H04L1/08(2006.01)i, H04L1/00(2006.01)i, H04L27/26(2006.01)i,
H04W28/04(2009.01)i, H04W72/12(2009.01)i, H04W84/06(2009.01)i
FI: H04L1/08, H04W28/04 110, H04L27/26 113, H04W84/06, H04W72/12, H04L1/00 E

According to International Patent Classification (IPC) or to both national classification and IPC

### B. FIELDS SEARCHED

Minimum documentation searched (classification system followed by classification symbols)
Int. Cl. H04L1/08, H04L1/00, H04L27/26, H04W28/04, H04W72/12, H04W84/06

Documentation searched other than minimum documentation to the extent that such documents are included in the fields searched

Published examined utility model applications of Japan     1922-1996
Published unexamined utility model applications of Japan   1971-2021
Registered utility model specifications of Japan           1996-2021
Published registered utility model applications of Japan   1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | US 2019/0349116 A1 (QUALCOMM INCORPORATED) 14 November 2019 (2019-11-14), abstract, paragraphs [0005], [0027], [0032], [0102], [0103], [0110]–[0120] | 1, 2, 6-9, 12-17 |
| Y | | 4, 5, 10, 11 |
| A | | 3 |
| X | US 2020/0022218 A1 (INTEL IP CORPORATION) 16 January 2020 (2020-01-16), abstract, paragraphs [0026], [0036], [0046], [0053], [0054], [0103] | 1, 2, 6-9, 12-17 |
| Y | | 4, 5, 10, 11 |
| X | JP 2018-514110 A (PANASONIC INTELLECTUAL PROPERTY CORPORATION OF AMERICA) 31 May 2018 (2018-05-31), abstract, paragraphs [0028], [0029], [0035] | 1, 2, 6-9, 12-17 |
| Y | | 4, 5, 10, 11 |

☒ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 31.08.2021 | 07.09.2021 |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

| | International application No. |
|---|---|
| | PCT/JP2021/026327 |

C (Continuation).    DOCUMENTS CONSIDERED TO BE RELEVANT

| Category* | Citation of document, with indication, where appropriate, of the relevant passages | Relevant to claim No. |
|---|---|---|
| Y | 西尾昭彦, 3GPP における 5G Non-Terrestrial Networks の標準化動向, 電子情報通信学会技術研究報告, Vol. 120, No. 129, pp. 37-41, Ch. 5.2.1 (NISHIO, Akihiko. Standardization trend on 5G Non-Terrestrial Networks in 3GPP. IEICE Technical Report.) | 5 |
| Y | WO 2020/144895 A1 (PANASONIC INTELLECTUAL PROPERTY CORPORATION OF AMERICA) 16 July 2020 (2020-07-16), paragraphs [0059]-[0064] | 10, 11 |

Form PCT/ISA/210 (continuation of second sheet) (January 2015)

INTERNATIONAL SEARCH REPORT

Information on patent family members

International application No.

PCT/JP2021/026327

| Patent Documents referred to in the Report | Publication Date | Patent Family | Publication Date |
|---|---|---|---|
| US 2019/0349116 A1 | 14.11.2019 | WO 2019/217730 A2 | |
| US 2020/0022218 A1 | 16.01.2020 | WO 2018/169806 A1 | |
| JP 2018-514110 A | 31.05.2018 | US 2017/0265174 A1 abstract, paragraphs [0026], [0027], [0033] WO 2016/161618 A1 EP 3621389 A1 CN 107079436 A KR 10-2017-0136491 A | |
| WO 2020/144895 A1 | 16.07.2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020176833 A

- JP 2021005151 A

**Non-patent literature cited in the description**

- Solutions for NR to support non-terrestrial networks (NTN) (Release 16). *3GPP, TR38.821 V16.0.0,* December 2019

- Study on New Radio (NR) to support non-terrestrial networks (Release 15). *3GPP, TR38.811 V15.3.0,* July 2020